# EUROPEAN PATENT APPLICATION

(11) **EP 4 783 643 A1**
(43) Date of publication of application: **29.07.2026**
(21) Application number: 23952595.9
(22) Date of filing: 20.09.2023
(51) Int. Cl.: H04W 24/02

(54) **CHANNEL STATE INFORMATION ACQUISITION METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2023/120156
(87) International publication number: WO 2025/059935

(57) **Abstract**

The present application discloses a method, an apparatus, a device and a medium for acquiring channel state information, which belong to the communication field. The method is executed by a first node, and the method comprises: receiving a first signal from a second node, where the second node comprises a low-power terminal or a low-power module; acquiring first Channel State Information (CSI) between the first node and the second node based on a measurement result of the first signal. Since the acquisition of the first CSI does not depend on the measurement of the second node, the power consumption required by the second node for measuring a reference signal is reduced. In addition, the acquisition of the first CSI does not depend on the feedback of CSI information by the second node, so the resource overhead required by the second node for feeding back CSI information is reduced. Moreover, since it is unnecessary to feed back CSI information based on a vector quantization or codebook-based method, the loss of precision and accuracy of the CSI information is avoided.

## Description

### TECHNICAL FIELD

The present disclosure relates to the field of communications, and in particular to a method and apparatus for acquiring channel state information, a device and a medium.

### BACKGROUND

A communication device periodically measures a reference signal to obtain Channel State Information (CSI), or periodically feeds back CSI. This needs to consume a large amount of air interface resource overhead and causes relatively high power consumption of the communication device, which is unfavorable to resource utilization efficiency.

How to reduce the power consumption required by a communication device to acquire CSI is a problem to be solved.

### SUMMARY

The present disclosure provides a method and apparatus for acquiring channel state information, a device and a medium, and the technical solution at least includes the following.

According to an aspect of the embodiments of the present disclosure, a method for acquiring channel state information is provided, the method is executed by a first node, and the method includes:
receiving a first signal from a second node, where the second node includes a low-power terminal or a low-power module; and
acquiring first Channel State Information (CSI) between the first node and the second node based on a measurement result of the first signal.

According to another aspect of the embodiments of the present disclosure, a method for acquiring channel state information is provided, the method is executed by a second node, and the method includes:
transmitting or backscattering a first signal, where a measurement result of the first signal is used to acquire first Channel State Information (CSI) between a first node and the second node;
wherein the second node includes a low-power terminal or a low-power module.

According to another aspect of the embodiments of the present disclosure, an apparatus for acquiring channel state information is provided, and the apparatus includes:
a receiving module, configured to receive a first signal from a second node, where the second node includes a low-power terminal or a low-power module; and
a processing module, configured to acquire first Channel State Information (CSI) between the apparatus and the second node based on a measurement result of the first signal.

According to another aspect of the embodiments of the present disclosure, an apparatus for acquiring channel state information is provided, and the apparatus includes:
a transmitting module, configured to transmit or backscatter a first signal, where a measurement result of the first signal is used to acquire first Channel State Information (CSI) between a first node and the apparatus;
wherein the apparatus includes a low-power terminal or a low-power module.

According to an aspect of the embodiments of the present disclosure, a communication device is provided, where the communication device includes:
a processor;
a receiver and/or a transmitter connected to the processor; and
a memory configured to store instructions executable by the processor;
wherein the communication device is configured to implement the method for acquiring channel state information as described above.

According to another aspect of the embodiments of the present disclosure, a communication device is provided, the communication device includes a receiver and/or a transmitter; wherein the communication device is configured to implement the method for acquiring channel state information as described above.

According to an aspect of the present disclosure, a computer-readable storage medium is provided, where executable instructions are stored in the computer-readable storage medium, and the executable instructions are loaded and executed by a processor to implement the method for acquiring channel state information as described in the above aspects.

According to an aspect of the present disclosure, a computer program product is provided, the computer program product includes computer instructions stored in a computer-readable storage medium; a processor of a computer device is configured to read the computer instructions from the computer-readable storage medium and execute the computer instructions, so that the computer device implements the method for acquiring channel state information as described in the above aspects.

According to an aspect of the present disclosure, a chip is provided, the chip includes a programmable logic circuit and/or program instructions, and the chip is configured to implement the method for acquiring channel state information as described in the above aspects when running.

According to an aspect of the present disclosure, a computer program is provided, where the computer program includes computer instructions; a processor of a computer device executes the computer instructions, so that the computer device implements the method for acquiring channel state information as described in the above aspects.

The technical solutions provided in the embodiments of the present disclosure may include the following beneficial effects:

CSI is acquired by means of a first signal from a second node. Since the second node includes a low-power terminal or a low-power module, the power consumption required by the second node to transmit the first signal is extremely low or even zero, so that the overall power consumption required for acquiring CSI is significantly reduced. Compared with periodically acquiring CSI through a communication device that does not include a low-power terminal or a low-power module, the method provided in the embodiments of the present disclosure not only saves the power consumption of the communication device, but also reduces the resource overhead of transmitting reference signals and feeding back CSI. Since the acquisition of the first CSI does not depend on the measurement of the second node, the power consumption required by the second node to measure the reference signal is reduced. In addition, the acquisition of the first CSI does not depend on the feedback of CSI by the second node, so the resource overhead required by the second node to feed back CSI is reduced. Moreover, since there is no need to feed back CSI based on a vector quantization or codebook-based method, the loss of precision and accuracy of CSI is avoided.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description are only some embodiments of the present disclosure, and those of ordinary skill in the art may obtain other drawings according to these drawings without creative efforts.
Fig. 1 is a schematic diagram of a wireless communication system according to an exemplary embodiment of the present disclosure.
Fig. 2 is a schematic structural diagram of a communication device according to an exemplary embodiment of the present disclosure.
Fig. 3 is a schematic diagram of a communication system according to an exemplary embodiment of the present disclosure.
Fig. 4 is a schematic diagram of radio frequency energy harvesting according to an exemplary embodiment of the present disclosure.
Fig. 5 is a schematic diagram of a backscattering communication process according to an exemplary embodiment of the present disclosure.
Fig. 6 is a schematic diagram of resistive load modulation according to an exemplary embodiment of the present disclosure.
Fig. 7 is a schematic flowchart of a method for acquiring channel state information according to an exemplary embodiment of the present disclosure.
Fig. 8 is a schematic flowchart of a method for acquiring channel state information according to an exemplary embodiment of the present disclosure.
Fig. 9 is a schematic flowchart of a method for acquiring channel state information according to an exemplary embodiment of the present disclosure.
Fig. 10 is a schematic flowchart of a method for acquiring channel state information according to an exemplary embodiment of the present disclosure.
Fig. 11 is a schematic flowchart of a method for acquiring channel state information according to an exemplary embodiment of the present disclosure.
Fig. 12 is a schematic flowchart of a method for acquiring channel state information according to an exemplary embodiment of the present disclosure.
Fig. 13 is a schematic flowchart of a method for acquiring channel state information according to an exemplary embodiment of the present disclosure.
Fig. 14 is a schematic diagram of a method for acquiring channel state information according to an exemplary embodiment of the present disclosure.
Fig. 15 is a schematic flowchart of a method for acquiring channel state information according to an exemplary embodiment of the present disclosure.
Fig. 16 is a schematic diagram of a method for acquiring channel state information according to an exemplary embodiment of the present disclosure.
Fig. 17 is a schematic flowchart of a method for acquiring channel state information according to an exemplary embodiment of the present disclosure.
Fig. 18 is a schematic diagram of a method for acquiring channel state information according to an exemplary embodiment of the present disclosure.
Fig. 19 is a schematic diagram of a method for acquiring channel state information according to an exemplary embodiment of the present disclosure.
Fig. 20 is a schematic flowchart of a method for acquiring channel state information according to an exemplary embodiment of the present disclosure.
Fig. 21 is a schematic diagram of a method for acquiring channel state information according to an exemplary embodiment of the present disclosure.
Fig. 22 is a structural block diagram of an apparatus for acquiring channel state information according to an exemplary embodiment of the present disclosure.
Fig. 23 is a structural block diagram of an apparatus for acquiring channel state information according to an exemplary embodiment of the present disclosure.
Fig. 24 is a schematic structural diagram of a communication device according to an exemplary embodiment of the present disclosure.
Fig. 25 is a schematic structural diagram of a communication device according to an exemplary embodiment of the present disclosure.

### DETAILED DESCRIPTION

To make the objectives, technical solutions and advantages of the present disclosure clearer, the implementations of the present disclosure are described in further detail below with reference to the accompanying drawings. Exemplary embodiments are described in detail herein, and examples thereof are shown in the accompanying drawings. When the following description refers to the accompanying drawings, the same numerals in different drawings denote the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

The terms used in the present disclosure are for the purpose of describing specific embodiments only and are not intended to limit the present disclosure. As used in the present disclosure and the appended claims, the singular forms "a", "said" and "the" are also intended to include the plural forms unless the context clearly indicates otherwise. It should also be understood that the term "and/or" as used herein refers to and includes any and all possible combinations of one or more of the associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, first information may also be referred to as second information, and similarly, second information may also be referred to as first information. Depending on the context, the word "if" as used herein may be interpreted as "when" or "while" or "in response to determining".

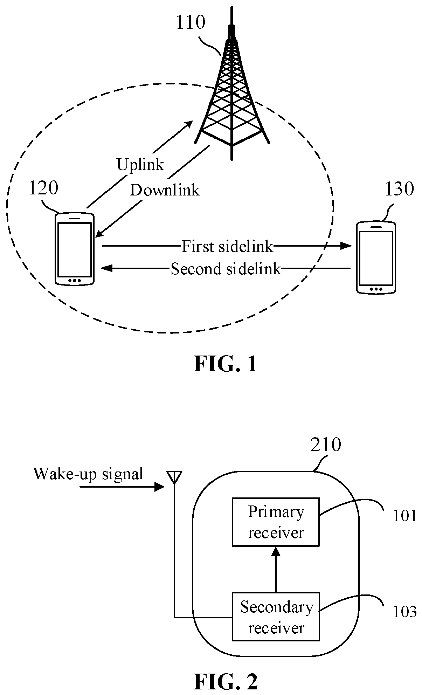

Fig. 1 is a schematic diagram of a wireless communication system according to an exemplary embodiment of the present disclosure. The wireless communication system includes a network device 110 and a terminal device 120, and/or a terminal device 120 and a terminal device 130, which is not limited in the present disclosure.

The network device 110 in the present disclosure provides a wireless communication function, and the network device 110 includes, but is not limited to: an Evolved Node B (eNB), a Radio Network Controller (RNC), a Node B (NB), a Base Station Controller (BSC), a Base Transceiver Station (BTS), a home base station (e.g., a Home Evolved Node B or a Home Node B, HNB), a Baseband Unit (BBU), an Access Point (AP) in a Wireless Fidelity (Wi-Fi) system, a wireless relay node, a wireless backhaul node, a Transmission Point (TP), a Transmission and Reception Point (TRP), etc., and may also be a Next Generation Node B (gNB) or a transmission point (TRP or TP) in a 5th Generation (5G) mobile communication system, or one or a group of antenna panels (including multiple antenna panels) of a base station in a 5G system, or a network node constituting a gNB or a transmission point, such as a Baseband Unit (BBU) or a Distributed Unit (DU), or a base station in a Beyond Fifth Generation (B5G) mobile communication system and a 6th Generation (6G) mobile communication system, or a Core Network (CN), a Fronthaul, a Backhaul, a Radio Access Network (RAN), a network slice, etc., or a reader/writer of a Radio Frequency Identification (RFID) system.

The terminal device 120 and/or the terminal device 130 in the present disclosure may also be referred to as a User Equipment (UE), an access terminal, a subscriber unit, a subscriber station, a mobile station, a mobile console, a remote station, a remote terminal, a mobile device, a user terminal, a terminal, a wireless communication device, a user agent or a user apparatus. The terminal includes, but is not limited to: a handheld device, a wearable device, a vehicle-mounted device, an Internet of Things (IoT) device, etc., for example: an electronic tag, a controller, a mobile phone, a tablet computer, an e-book reader, a laptop computer, a desktop computer, a television, a game console, a Mobile Internet Device (MID), an Augmented Reality (AR) terminal, a Virtual Reality (VR) terminal, a Mixed Reality (MR) terminal, a wearable device, a gamepad, a wireless terminal in Industrial Control, a wireless terminal in Self Driving, a wireless terminal in Remote Medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), or a Customer Premise Equipment (CPE), etc.

The network device 110 and the terminal device 120 communicate with each other through a certain air interface technology, such as a Uu interface.

Exemplarily, there are two communication scenarios between the network device 110 and the terminal device 120: an uplink communication scenario and a downlink communication scenario. Uplink communication refers to sending a signal to the network device 110. Downlink communication refers to sending a signal to the terminal device 120.

The terminal device 120 and the terminal device 130 communicate with each other through a certain direct communication interface, such as a PC5 interface.

In some embodiments, there are two communication scenarios between the terminal device 120 and the terminal device 130: a first sidelink communication scenario and a second sidelink communication scenario. The first sidelink communication refers to sending a signal to the terminal device 130. The second sidelink communication refers to sending a signal to the terminal device 120.

Both the terminal device 120 and the terminal device 130 are within a network coverage range and located in the same cell, or both the terminal device 120 and the terminal device 130 are within the network coverage range but located in different cells, or the terminal device 120 is within the network coverage range while the terminal device 130 is outside the network coverage range.

The technical solutions provided in the embodiments of the present disclosure may be applied to various communication systems, for example: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolved system of the NR system, an LTE-based access to unlicensed spectrum (LTE-U) system, an NR-based access to unlicensed spectrum (NR-U) system, a Terrestrial Networks (TN) system, a Non-Terrestrial Networks (NTN) system, a Wireless Local Area Networks (WLAN), Wireless Fidelity (Wi-Fi), a cellular IoT system, a cellular passive IoT system, and may also be applicable to an evolved system subsequent to the 5G NR system, as well as a B5G system, a 6G system and subsequent evolved systems. In some embodiments of the present disclosure, "NR" may also be referred to as a 5G NR system or a 5G system. The 5G mobile communication system may include a Non-Standalone (NSA) network and/or a Standalone (SA) network.

The technical solutions provided in the embodiments of the present disclosure may also be applied to a Machine Type Communication (MTC) network, a Long Term Evolution-Machine (LTE-M) network, a Device to Device (D2D) network, a Machine to Machine (M2M) network, an Internet of Things (IoT) network or other networks. The IoT network may include a vehicle networking system for example. The communication modes in the vehicle networking system are collectively referred to as Vehicle to X (V2X, where X may represent anything), for example, the V2X may include: Vehicle to Vehicle (V2V) communication, Vehicle to Infrastructure (V2I) communication, Vehicle to Pedestrian (V2P) communication, or Vehicle to Network (V2N) communication, etc.

The wireless communication system provided in this embodiment may be applied to, but not limited to, at least one of the following communication scenarios: an uplink communication scenario, a downlink communication scenario, or a sidelink communication scenario.

With the development of communication technologies and the expansion of communication demands, there are increasingly higher requirements for the overall size, manufacturing cost, service life, ease of use, recycling treatment, power consumption and other aspects of communication devices. The communication device shown in Fig. 2 can meet the above high requirements.

Fig. 2 is a structural block diagram of a communication device 210 according to an exemplary embodiment of the present disclosure. The communication device 210 may be implemented as the terminal device 120 and/or the terminal device 130 shown in Fig. 1, or may also be implemented as the network device 110 shown in Fig. 1.

The communication device 210 includes a primary receiver 101 and a secondary receiver 103. The power consumption of the secondary receiver 103 is lower than that of the primary receiver 101. The secondary receiver 103 may replace the primary receiver 101 to receive a part of signals, that is, some operations that must be performed by the primary receiver 101 originally may be performed by the secondary receiver 103 instead. In addition, the primary receiver 101 may remain in an off state when not instructed to turn on by the secondary receiver 103, avoiding meaningless power consumption waste of the primary receiver 101 when there is no need to receive signals or data. Since the power of the secondary receiver 103 is lower, the replacement work of the secondary receiver 103 can significantly reduce the overall power consumption of the terminal device and achieve energy saving of the terminal device.

Further, the communication device 210 shown in Fig. 2 may also be used in combination with a Wake Up Signal (WUS) mechanism. If the secondary receiver 103 receives a WUS, the primary receiver 101 is dynamically woken up. If the secondary receiver 103 does not receive a WUS, the primary receiver 101 is not woken up and remains in an off state. Since the secondary receiver 103 does not need to turn on or off to save power like the primary receiver 101, but can be activated by a WUS at any time to receive wake-up information, receiving a WUS by the secondary receiver 103 can reduce more power consumption compared with a solution where the primary receiver 101 receives a WUS. Therefore, the low-power characteristic of the secondary receiver 103 can further improve the energy-saving effect of the WUS mechanism and further reduce the overall power consumption of the terminal device.

The primary receiver may also be referred to as a first receiver, and the secondary receiver may also be referred to as a second receiver or a Wake-Up Receiver (WUR). The present disclosure imposes no limitation on the naming of the two receivers.

Based on energy sources and usage modes, the communication device 210 may be divided into the following three types:
(1) Passive device: A passive device does not need a built-in battery. When a passive device is close to a network device (such as a reader/writer of an RFID system), the passive device is within a near-field range formed by antenna radiation of the network device. Therefore, an antenna of the passive device generates an induced current through electromagnetic induction, and the induced current drives a low-power chip circuit of the passive device, so as to implement demodulation of a forward link signal, modulation of a backward link signal and other work. For a backscattering link, a passive device may transmit a signal in a backscattering or ultra-low-power active transmission manner. A passive device does not need a built-in battery to drive either a forward link or a backward link, so it can be considered that a passive device is a zero-power device. In addition to no need for a battery, the radio frequency circuit and baseband circuit of a passive device are also very simple, for example, there is no need for devices such as a Low Noise Amplifier (LNA), a Power Amplifier (PA), a crystal oscillator, an Analog to Digital Converter (ADC), etc., so that the passive device has many advantages such as small size, light weight, very low price and long service life.
(2) Semi-passive device: A semi-passive device is not equipped with a conventional battery itself, and may use a radio frequency energy harvesting module to harvest radio wave energy and store the harvested energy in an energy storage unit (such as a capacitor) at the same time. After the energy storage unit obtains energy, it can drive a low-power chip circuit of the semi-passive device to implement demodulation of a forward link signal, modulation of a backward link signal and other work. For a backscattering link, a semi-passive device may transmit a signal in a backscattering or low-power active transmission manner.
   A semi-passive device does not need a built-in battery to drive either a forward link or a backward link. Although energy stored in a capacitor is used during operation, the energy source is radio energy or environmental energy harvested by a radio frequency energy harvesting module, so it can be considered that a semi-passive device is also a zero-power device.
   [A semi-passive device inherits many advantages of a passive device, such as small size, light weight, very low price and long service life.
(3) Active device: An active device may have a built-in battery, which is used to drive a low-power chip circuit of the active device to implement demodulation of a forward link signal, modulation of a backward link signal and other work. Signal transmission of a backward link of an active device may not need to consume the own power of the active device, and backward link transmission is implemented in a backscattering manner. Alternatively, an active device implements backward link transmission in a low-power active transmission manner. Although an active device has a built-in battery, such an active device has extremely low power consumption and complexity, so the capacity of the battery can be set in a small range, thereby achieving low cost and small size. The built-in battery of the active device may also serve as an energy storage unit for storing environmental energy harvested by an energy harvesting module, so that the active device has a long maintenance cycle or even no maintenance is needed.

In an active device, a built-in battery supplies power, which increases the communication distance of the active device and improves communication reliability. Therefore, active devices are applied in some scenarios with relatively high requirements for communication distance, reading delay and the like.

Based on transmitter types, the communication device 210 may be divided into the following three types:
(1) Backscattering-based device: Such a device performs uplink data transmission in the above backscattering manner. Such a device does not have an active transmitter with active transmission capability, and only has a backscattering transmitter. Therefore, when such a device sends uplink data, a network device is required to provide a carrier, and the device implements uplink data transmission by performing backscattering based on the carrier.
(2) Active transmitter-based device: Such a device performs uplink data transmission by using an active transmitter with active transmission capability. Therefore, when such a device sends uplink data, it can send uplink data by using its own active transmitter without requiring a network device to provide a carrier. The active transmitter applicable to such a device may be, for example, an ultra-low-power Amplitude Shift Keying (ASK) transmitter, an ultra-low-power Frequency Shift Keying (FSK) transmitter, etc. Based on current implementation, the overall power consumption of such a transmitter can be reduced to 400~600 microwatts when transmitting a 100-microwatt signal.
(3) Device with both backscattering and active transmitter: Such a device supports both backscattering and an active transmitter. The device may determine to use a backscattering manner or an active transmitter for active transmission according to different conditions (such as different power levels, different available environmental energy conditions) or based on scheduling of a network device.

The communication device 210 shown in Fig. 2 may also be referred to as: a low-power device, an ultra-low-power device, a zero-power device, a Passive IoT device, or an Ambient Power Enabled Internet of Things (Ambient IoT/A-IoT) device.

The communication technology implemented by the communication device 210 shown in Fig. 2 may be referred to as a low-power communication technology, an ultra-low-power communication technology, a zero-power communication technology, an Ambient Power Enabled Internet of Things (Ambient IoT/A-IoT) technology, a Passive IoT technology, or a zero-power IoT technology.

An A-loT device adopting the A-loT technology may use various environmental energies, such as wireless radio frequency energy, light energy, solar energy, thermal energy, mechanical energy, etc., to drive its own operation. Among them, an A-IoT device based on wireless radio frequency energy harvesting may require a network device to provide a wireless radio frequency energy supply signal.

A-IoT devices may be divided into the following three types, each having corresponding complexity and communication capabilities:
Device A: No energy storage capability. It cannot send independent signals, that is, a backscattering transmission manner is adopted.

Device B: With energy storage capability. It cannot send independent signals, that is, a backscattering transmission manner is adopted, and the stored energy can be used to amplify backscattering signals.

Device C: With energy storage capability. It can send independent signals, that is, it has active transmission capability.

Device A has the lowest complexity and power consumption, with power consumption as low as 1 microwatt (µW), but its communication distance is limited, generally only a few meters. Device A requires a network device to provide a carrier signal for backscattering transmission. Device C is generally equipped with a capacitor with a large capacity to store energy from the environment, and its power consumption can support several hundred microwatts, so it can support active signal transmission and has a long communication distance. Since Device C can perform active transmission, there is no need for a network device to provide a carrier signal for Device C. The complexity and power consumption of Device B are between those of Device A and Device C.

Compared with other IoT devices, A-IoT devices have many advantages such as no conventional battery, no maintenance, small size, low complexity and low cost, and a long life cycle.

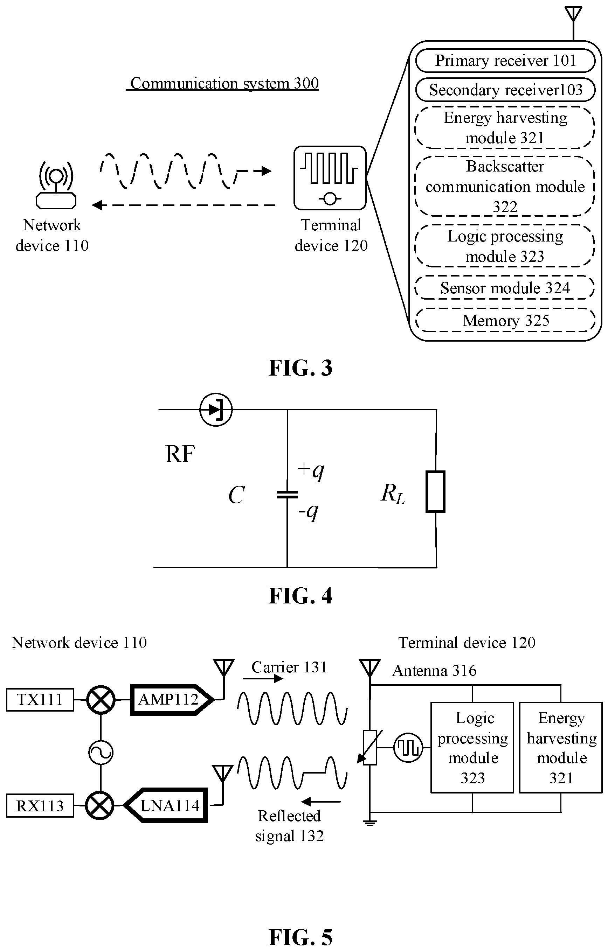

Fig. 3 is a schematic diagram of a communication system 300 according to an exemplary embodiment of the present disclosure, by taking an example where the communication system 300 includes a network device 110 and a terminal device 120.

The terminal device 120 includes a primary receiver 101 and a secondary receiver 103 as shown in Fig. 2. Optionally, in addition to the primary receiver 101 and the secondary receiver 103, the terminal device 120 further includes an energy harvesting module 321. Optionally, in addition to the primary receiver 101 and the secondary receiver 103, the terminal device 120 further includes a backscattering communication module 322. Optionally, in addition to the primary receiver 101 and the secondary receiver 103, the terminal device 120 further includes a logic processing module 323, for example, the logic processing module 323 includes a low-power computing module. Optionally, in addition to the primary receiver 101 and the secondary receiver 103, the terminal device 120 further includes a sensor module 324. Optionally, in addition to the primary receiver 101 and the secondary receiver 103, the terminal device 120 further includes a memory 325. Optionally, in addition to the primary receiver 101 and the secondary receiver 103, the terminal device 120 further includes one or more of the energy harvesting module 321, the backscattering communication module 322, the logic processing module 323, the sensor module 324 and the memory 325.

Exemplarily, the energy harvesting module 321 may harvest energy carried by radio waves in space to supply power for driving each module of the terminal device 120. After the terminal device 120 obtains energy, it may receive a signal from the network device 110 through the secondary receiver 103 and the primary receiver 101, or send data to the network device 110 through the backscattering communication module 322. The data sent by the terminal device 120 may be data stored by itself (such as an identity identifier or pre-written information, e.g., the production date, brand, manufacturer of a commodity, etc.). The sensor module 324 may include various types of sensors, and the terminal device 120 may report data collected by various types of sensors based on a low-power mechanism. The memory 325 is used to store some basic information (such as an item identifier) or acquire sensing data such as ambient temperature and ambient humidity.

The terminal device 120 may adopt the logic processing module 323 to implement simple operation work such as simple signal demodulation, decoding or encoding, modulation, and the hardware design may be very simple, so that the terminal device 120 has a very low cost and a small size.

It should be understood that the modules included in the terminal device 120 shown in Fig. 3 are only an example and not a limitation.

Fig. 4 shows a schematic diagram of Radio Frequency Power Harvesting performed by the energy harvesting module 321. Radio frequency energy harvesting is based on the electromagnetic induction principle, and a radio frequency module RF is connected to a capacitor C and a load resistor RL which are in parallel through electromagnetic induction to harvest energy of spatial electromagnetic waves and obtain energy required to drive a zero-power device to work, such as energy for driving a low-power demodulation module, a modulation module, a sensor, memory reading and the like. Therefore, a zero-power device does not need a traditional battery.

Fig. 5 shows a schematic diagram of Back Scattering performed by the backscattering communication module 322. A terminal device 120 receives a wireless signal carrier 131 sent by a Transmit (TX) module 111 of a network device 110 by using an Amplifier (AMP) 112, modulates the wireless signal carrier 131, loads information to be sent by using a logic processing module 323, and harvests radio frequency energy by using an energy harvesting module 321. The terminal device 120 radiates a modulated reflected signal 132 by using an antenna 316, and this information transmission process is referred to as backscattering communication. A Receive (RX) module 113 of the network device 110 receives the modulated reflected signal 132 by using a Low Noise Amplifier (LNA) 114. Backscattering is inseparable from a load modulation function. Load modulation adjusts and controls circuit parameters of an oscillation loop of the terminal device 120 according to the beat of a data stream, so that parameters such as the impedance of the terminal device 120 change accordingly to complete the modulation process.

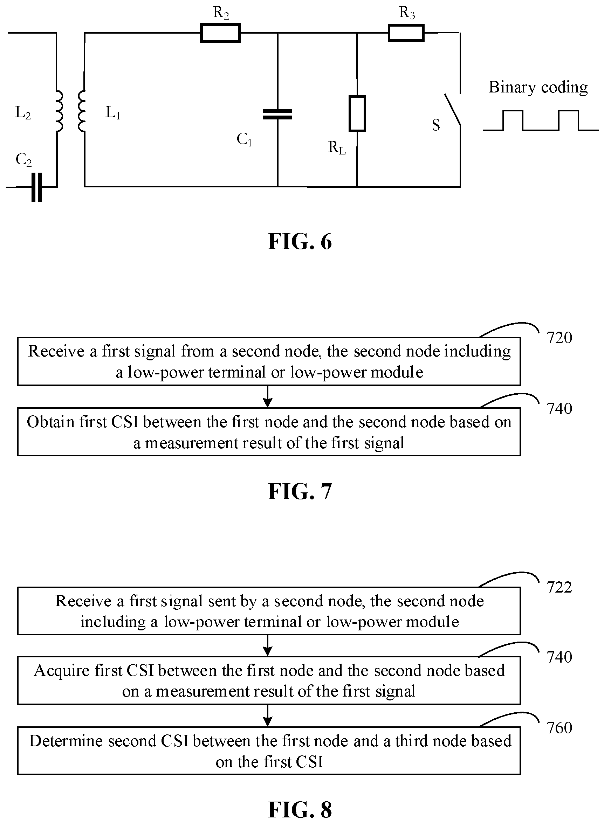

Load modulation technologies mainly include resistive load modulation and capacitive load modulation. Fig. 6 shows a schematic diagram of resistive load modulation. In resistive load modulation, a load resistor RL is connected in parallel with a third resistor R3, a switch S controlled based on binary coding is turned on or off, and the on/off of the third resistor R3 causes a change in voltage on the circuit. The load resistor RL is connected in parallel with a first capacitor C1, the load resistor RL is connected in series with a second resistor R2, and the second resistor R2 is connected in series with a first inductor L1. The first inductor L1 is coupled to a second inductor L2, and the second inductor L2 is connected in series with a second capacitor C2. Exemplarily, Amplitude Shift Keying (ASK) may be implemented, that is, signal modulation and transmission are implemented by adjusting the amplitude of a backscattering signal of a terminal device. Similarly, in capacitive load modulation, the on/off of a capacitor can change the resonant frequency of a circuit to implement Frequency Shift Keying (FSK), that is, signal modulation and transmission are implemented by adjusting the working frequency of a backscattering signal of a terminal device.

The terminal device 120 may modulate incoming wave signals by means of load modulation to implement a backscattering communication process.

Optionally, the network device 110 also includes one or more of a primary receiver 101, a secondary receiver 103, an energy harvesting module 321, a backscattering communication module 322, a logic processing module 323, a sensor module 324 and a memory 325.

Due to significant advantages such as extremely low cost, extremely low power consumption and small size, the communication system shown in Fig. 3 can be widely applied to various industries, such as logistics for vertical industries, intelligent warehousing, smart agriculture, energy and power, industrial internet, etc.; it can also be applied to personal applications such as smart wearables and smart homes.

For example, it is applied to at least the following four types of scenarios:
(1) Object identification, such as logistics management, product management on production lines, and supply chain management;
(2) Environmental monitoring, such as monitoring of temperature, humidity and harmful gases in working and natural environments;
(3) Positioning, such as indoor positioning, intelligent object finding, and product positioning on production lines; and
(4) Intelligent control, such as intelligent control of various electrical appliances in smart homes (turning on/off an air conditioner, adjusting temperature), and intelligent control of various facilities in agricultural greenhouses (automatic irrigation and fertilization).

The communication system shown in Fig. 3 can also meet the communication requirements of developing ultra-low-cost, ultra-small-size, battery-free/maintenance-free cellular IoT, such as harsh communication environments (extreme environments such as high temperature, extremely low temperature, high humidity, high pressure, high radiation or highspeed movement) faced by IoT technologies such as NarrowBand-Internet of Things (NB-IoT), Machine-Type Communications (MTC) and RedCap, the demand for ultra-small-size terminal forms, and the demand for ultra-low-cost IoT communication.

In the communication system as shown in FIG. 1 or FIG. 3, the prerequisite for improving communication quality and ensuring system communication efficiency is to accurately obtain the channel quality or changes in channel state.

Taking the downlink channel between the network device 110 and the terminal device 120 as an example, the terminal device 120 feeds back the downlink channel quality to the network device 110 through Channel State Information (CSI), so that the network device 110 adopts appropriate signal transmission parameters for downlink transmission, such as Modulation and Coding Scheme (MCS) parameters, precoding schemes, time-domain resources and frequency-domain resources, thereby improving the downlink transmission quality (e.g., reducing the Block Error Rate (BLER) of downlink transmission).

The CSI may include at least one of the following: Channel Quality Indicator (CQI), Precoding Matrix Indicator (PMI), CSI Reference Signal Resource Indicator (CRI), SS/PBCH Block Resource Indicator (SSBRI), Layer Indicator (LI), Rank Indicator (RI), and Layer 1 Reference Signal Received Power (L1-RSRP).

Exemplarily, the terminal device 120 obtains CSI by measuring the downlink CSI-RS and reports the CSI to the network device 110. The CSI-RS may be configured to be transmitted periodically, semi-statically or aperiodically.

Taking the uplink channel between the terminal device 120 and the network device 110 as an example, the network device 110 obtains the uplink channel quality by measuring the uplink reference signal sent by the terminal device 120, so that the network device 110 adopts appropriate signal transmission parameters when scheduling the terminal device 120 for uplink transmission, such as MCS parameters, precoding schemes, time-domain resources and frequency-domain resources, thereby improving the uplink transmission quality (e.g., reducing the BLER of uplink transmission).

In the Time Division Duplex (TDD) mode, the network device 110 can obtain the uplink channel quality through the uplink reference signal, and then acquire the downlink channel quality by using the channel reciprocity.

The channel quality estimation method in the sidelink communication scenario may refer to that in the uplink and downlink communication scenarios. Taking the sidelink channel between the terminal device 120 and the terminal device 130 as an example, the terminal device 120 may feed back the quality of a first sidelink channel to the terminal device 130 through Channel State Information (CSI), and may also obtain the quality of a second sidelink channel by measuring a reference signal.

However, complete or periodic CSI feedback needs to consume a large amount of air interface resource overhead and causes relatively high power consumption of communication devices, which is detrimental to resource utilization efficiency. If Vector Quantization (VQ) or a Codebook-based method is adopted to reduce the overhead, the channel information will be lost to a certain extent; in addition, the feedback volume generated by the Vector Quantization (VQ) or Codebook-based method increases exponentially with the growth in the number of transmit antennas.

In view of the above problems, the present application provides a method, an apparatus, a device and a medium for acquiring channel state information, which reduce the power consumption required by a communication device to acquire channel state information and improve the efficiency of acquiring channel state information.

In the embodiments of the present application, CSI feedback may also be referred to as CSI backhaul or CSI reporting.

In the embodiments of the present application, the term "agreed" may be implemented by pre-storing corresponding codes, tables or other means usable for indicating relevant information in a communication device (e.g., a terminal device or a network device), and the specific implementation manner thereof is not limited in the present application. An agreement in a communication protocol may also be understood as being predefined by the communication protocol.

FIG. 7 is a schematic flowchart of a method for acquiring channel state information according to an exemplary embodiment of the present application. The method is executed by a first node and includes the following operations.

At operation 720, a first signal is received from a second node. The second node includes a low-power terminal or a low-power module.

Herein, the low-power terminal may also be referred to as a zero-power terminal, an ultra-low-power terminal, a Passive IoT device, or an Ambient IoT (A-IoT) device.

The low-power module may also be referred to as a zero-power module, an ultra-low-power module, a passive IoT module, or an ambient energy IoT module. Optionally, the low-power module includes one or more of a primary receiver 101, a secondary receiver 103, an energy harvesting module 321, a backscattering communication module 322, a logic processing module 323, a sensor module 324 and a memory 325. Optionally, the logic processing module 323 includes a low-power computing module.

In some embodiments, the second node is a low-power terminal. For example, the second node may be implemented as the terminal device 120 and/or the terminal device 130 as described above.

In some embodiments, the second node is a communication device including a low-power module, for example, the second node is a terminal device including a low-power module (e.g., the terminal device 120 and/or the terminal device 130 as described above), or a network device including a low-power module (e.g., the network device 110 as described above).

The second node supports a low-power communication mode, which may also be understood as that the second node has a capability of low-power communication or a low-power characteristic.

At operation 740, first CSI between the first node and the second node is acquired based on a measurement result of the first signal.

The first CSI refers to the CSI of the channel from the second node to the first node, which can reflect the channel quality or channel state from the second node to the first node.

In some embodiments, the CSI includes at least one of the following: CQI, PMI, CRI, SSBRI, Layer Indicator, Rank Indicator and L1-RSRP.

The first node is a receiver of the first signal. Exemplarily, in a downlink scenario, the receiver refers to a terminal device (the terminal device as shown in FIG. 1, FIG. 2 or FIG. 3); in an uplink scenario, the receiver refers to a network device (the network device as shown in FIG. 1, FIG. 2 or FIG. 3); in a sidelink scenario, the receiver refers to a second terminal device (the terminal device as shown in FIG. 1, FIG. 2 or FIG. 3).

In summary, in the method provided in the embodiments of the present application, CSI is acquired by means of the first signal from the second node. Since the second node includes a low-power terminal or a low-power module, the power consumption required by the second node to transmit the first signal is extremely low or even zero, so that the overall power consumption required for acquiring CSI is significantly reduced. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI.

In the present application, since the acquisition of the first CSI does not depend on the measurement of the second node, the power consumption required by the second node to measure the reference signal is reduced. In addition, the acquisition of the first CSI does not depend on the feedback of CSI by the second node, so the resource overhead required by the second node to feed back CSI is reduced. Moreover, since there is no need to feed back CSI based on a vector quantization or codebook-based method, the loss of precision and accuracy of CSI is avoided.

In some embodiments, step 720 may be implemented as step 722. Optionally, besides step 722 and step 740, the method for acquiring channel state information may further include step 760 as shown in FIG. 8. FIG. 8 is a schematic flowchart of a method for acquiring channel state information according to an exemplary embodiment of the present application. The method is executed by the first node as shown in FIG. 7 and includes the following operations.

At operation 722, a first signal sent by a second node is received. The second node includes a low-power terminal or a low-power module.

The first signal is sent by the second node to the first node.

In some embodiments, the first signal is sent by the second node to the first node based on first information, where the first information includes indication information and/or configuration information from other nodes, and the other nodes include nodes except the second node.

In some embodiments, the first information includes at least one of the following pieces of information:
1. A transmission period of the first signal;
2. Time-domain resources corresponding to the first signal;
3. Frequency-domain resources corresponding to the first signal;
4. A sequence corresponding to the first signal;
5. A modulation mode of the first signal; or
6. A coding mode of the first signal.

With respect to the transmission period of the first signal: for example, if the first signal is a periodically transmitted signal, the first information may indicate a transmission period value; for another example, if the transmission of the first signal is implemented through semi-static scheduling, the first information may indicate a transmission period value corresponding to the semi-static scheduling.

The time-domain resources corresponding to the first signal refer to the time-domain resources occupied by the transmission of the first signal. In some embodiments, the first information indicates time-domain resources occupied by each first signal respectively; or the first information indicates a set of time-domain resources corresponding to each first signal respectively; or the first information indicates a set of time-domain resources corresponding to a plurality of first signals. Each first signal corresponds to a different second node, i.e., the first signals are distinguished by their transmitters.

The frequency-domain resources corresponding to the first signal refer to the frequency-domain resources occupied by the transmission of the first signal. In some embodiments, the first information indicates frequency-domain resources occupied by each first signal respectively; or the first information indicates a set of frequency-domain resources corresponding to each first signal respectively; or the first information indicates a set of frequency-domain resources corresponding to a plurality of first signals. Each first signal corresponds to a different second node, i.e., the first signals are distinguished by their transmitters.

The sequence corresponding to the first signal includes an original sequence used to generate the first signal and/or a sequence used to randomize the first signal, where the sequence used to randomize the first signal is a random sequence or a pseudo-random sequence.

The modulation mode of the first signal includes at least one of the following: Orthogonal Frequency-Division Multiplexing (OFDM) modulation, Quadrature Phase Shift Keying (QPSK) modulation, Amplitude Shift Keying (ASK) modulation, Frequency Shift Keying (FSK) modulation, On-Off Keying (OOK) modulation, Multi-Carrier On-Off Keying (MC-OOK) modulation, and Quadrature Amplitude Modulation (QAM).

The coding mode of the first signal includes at least one of the following: Non-Return-to-Zero (NRZ) coding, Manchester coding, Unipolar Return-to-Zero (URZ) coding, Differential Binary Phase (DBP) coding, Miller coding and differential coding.

In some embodiments, the first information is preset information, or the first information is agreed by a communication protocol, or the first information is determined by other nodes.

In some embodiments, the first signal carries at least one of the following pieces of information:
1. Position information, configured to indicate a position of the second node;
2. Beam information, configured to indicate a beam adopted by the second node for sending the first signal; or
3. Frequency-domain resource information, configured to indicate frequency-domain resources adopted by the second node for sending the first signal.

The position information may be used to indicate an absolute position and/or a relative position of the second node.

In some embodiments, the absolute position refers to a latitude and longitude position (also referred to as an absolute geographic position). Exemplarily, the position information may indicate the absolute position of the second node through latitude and longitude or coordinates.

In some embodiments, the relative position refers to a position relative to a reference point (the reference point may be the first node or other nodes), and is also referred to as a relative geographic position. Exemplarily, the position information may indicate the relative position of the second node through coordinates, or indicate the relative position of the second node through a latitude and longitude offset value relative to the reference point. Exemplarily, the reference point is the first node; a plurality of regions are divided with the first node as the reference point within the coverage of the cell corresponding to the first node, and the relative position of the second node is indicated by a region number.

The position information carried by the first signal may be used by the first node to acquire the channel state or channel quality from the second nodes at different positions to the first node, facilitating the first node to clarify the differences or correlations between the channels corresponding to each second node.

The beam information carried by the first signal may be used by the first node to acquire the channel state or channel quality from the second nodes in different directions to the first node, facilitating the first node to clarify the differences or correlations between the channels corresponding to each beam direction.

The frequency-domain resource information carried by the first signal may be used by the first node to perform frequency offset estimation, which is conducive to improving the receiving quality and measurement accuracy of the first signal.

In some embodiments, the position information, beam information and frequency-domain resource information may be collectively referred to as control information or auxiliary information.

The second node is a transmitter of the first signal. Exemplarily, in a downlink scenario, the transmitter refers to a network device (the network device as shown in FIG. 1, FIG. 2 or FIG. 3); in an uplink scenario, the transmitter refers to a terminal device (the terminal device as shown in FIG. 1, FIG. 2 or FIG. 3); in a sidelink scenario, the transmitter refers to a first terminal device (the terminal device as shown in FIG. 1, FIG. 2 or FIG. 3).

For the relevant content of the second node, reference may be made to step 720, and details are not described herein again.

At operation 740, first CSI between the first node and the second node is acquired based on a measurement result of the first signal.

In some embodiments, the first node measures the received first signal to obtain a measurement result of the first signal.

For the relevant content of the first CSI and the first node, reference may be made to the above description, and details are not described herein again.

In some embodiments, the first node also includes a low-power terminal or a low-power module.

At operation 760, second CSI between the first node and a third node is determined based on the first CSI.

The third node includes a node except the first node.

In some embodiments, the first CSI is input into a first AI model to obtain the second CSI.

In some embodiments, the first AI model is trained by the first node, or trained by other nodes and sent to the first node, or jointly trained by the first node and other nodes.

In some embodiments, the CSI obtained by the AI model may have higher precision. Exemplarily, the first node may further acquire second CSI between the first node and the second node based on the first CSI, and the second CSI is superior to the first CSI in terms of precision and accuracy. Optionally, the first CSI represents the channel quality within a first time domain range, and the second CSI represents the channel quality within a second time domain range, where the second time domain range is later than the first time domain range in the time domain.

In some embodiments, the first node is enabled to obtain the second CSI corresponding to the third node by inputting the first CSI corresponding to the second node into the AI model without measuring the first signal from the third node, which saves the power consumption and resource overhead of the third node for transmitting the first signal and the first node for measuring the first signal from the third node, reduces the overall resource overhead and device power consumption in the communication system, and improves the efficiency of acquiring CSI in the communication system.

In some embodiments, the first node sends signals and/or data to the second node based on the first CSI, where the signals include one or more of system information, control signals, reference signals and synchronization signals.

In some embodiments, the first node sends signals and/or data to the third node based on the second CSI, where the signals include one or more of system information, control signals, reference signals and synchronization signals.

In summary, in the method provided in the embodiments of the present application, CSI is acquired by means of the first signal from the second node. Since the second node includes a low-power terminal or a low-power module, the power consumption required by the second node to transmit the first signal is extremely low or even zero, so that the overall power consumption required for acquiring CSI is significantly reduced. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI. In addition, the efficiency of scheduling the first signal is improved and the resource overhead required for scheduling the first signal is reduced by configuring the parameters for the second node to transmit the first signal through the first information.

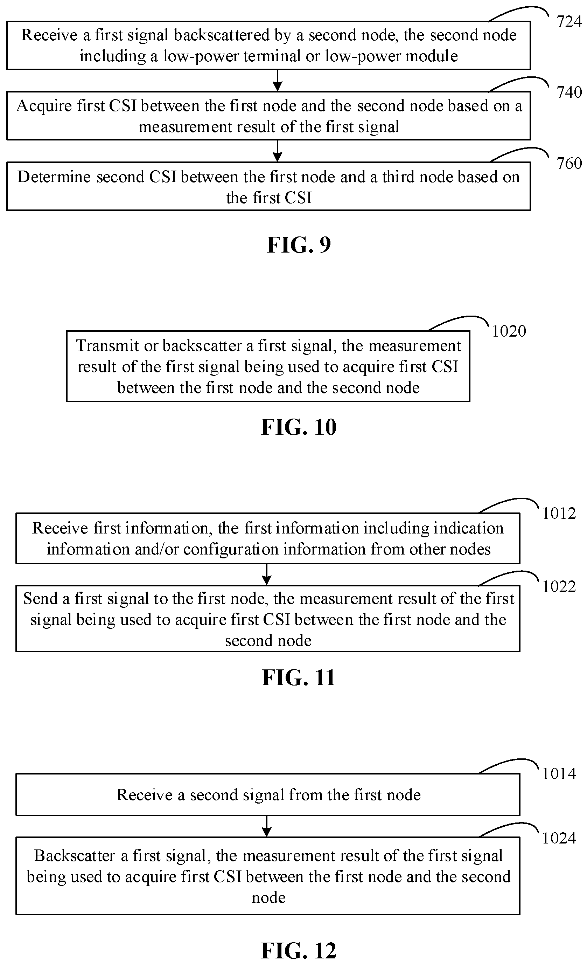

In some embodiments, step 720 may be implemented as step 724. Optionally, besides step 724 and step 740, the method for acquiring channel state information may further include step 760 as shown in FIG. 9. FIG. 9 is a schematic flowchart of a method for acquiring channel state information according to an exemplary embodiment of the present application. The method is executed by the first node as shown in FIG. 7 and includes the following operations.

At operation 724, a first signal backscattered by a second node is received. The second node includes a low-power terminal or a low-power module.

The first signal is backscattered by the second node.

In some embodiments, before performing operation 724, the first node further sends a second signal to the second node, and the first signal is a backscattered signal of the second signal. That is, the first node sends the second signal to the second node, and the second node receives the second signal and backscatters the first signal.

In some embodiments, the first signal carries at least one of the following pieces of information:
1. Position information, configured to indicate a position of the second node;
2. Beam information, configured to indicate a beam adopted by the second node for backscattering the first signal; or
3. Frequency-domain resource information, configured to indicate frequency-domain resources adopted by the second node for backscattering the first signal.

The position information may be used to indicate an absolute position and/or a relative position of the second node.

In some embodiments, the absolute position refers to a latitude and longitude position (also referred to as an absolute geographic position). Exemplarily, the position information may indicate the absolute position of the second node through latitude and longitude or coordinates.

In some embodiments, the relative position refers to a position relative to a reference point (the reference point may be the first node or other nodes), and is also referred to as a relative geographic position. Exemplarily, the position information may indicate the relative position of the second node through coordinates, or indicate the relative position of the second node through a latitude and longitude offset value relative to the reference point. Exemplarily, the reference point is the first node; a plurality of regions are divided with the first node as the reference point within the coverage of the cell corresponding to the first node, and the relative position of the second node is indicated by a region number.

The position information carried by the first signal may be used by the first node to acquire the channel state or channel quality from the second nodes at different positions to the first node, facilitating the first node to clarify the differences or correlations between the channels corresponding to each second node.

The beam information carried by the first signal may be used by the first node to acquire the channel state or channel quality from the second nodes in different directions to the first node, facilitating the first node to clarify the differences or correlations between the channels corresponding to each beam direction.

The frequency-domain resource information carried by the first signal may be used by the first node to perform frequency offset estimation, which is conducive to improving the receiving quality and measurement accuracy of the first signal.

The second node is a backscatter party of the first signal. Exemplarily, in a downlink scenario, the transmitter refers to a network device (the network device as shown in FIG. 1, FIG. 2 or FIG. 3); in an uplink scenario, the transmitter refers to a terminal device (the terminal device as shown in FIG. 1, FIG. 2 or FIG. 3); in a sidelink scenario, the transmitter refers to a first terminal device (the terminal device as shown in FIG. 1, FIG. 2 or FIG. 3).

For the relevant content of the second node, reference may be made to step 720, and details are not described herein again.

At operation 740, first CSI between the first node and the second node is acquired based on a measurement result of the first signal.

In some embodiments, the first node measures the received first signal to obtain a measurement result of the first signal.

For the relevant content of the first CSI and the first node, reference may be made to the above description, and details are not described herein again.

In some embodiments, the first node also includes a low-power terminal or a low-power module.

At operation 760, second CSI between the first node and a third node is determined based on the first CSI.

The third node includes a node except the first node.

In some embodiments, the third node includes the second node, and the first node may further acquire second CSI between the first node and the second node based on the first CSI, where the second CSI may be different from the first CSI in terms of precision, accuracy, valid time and the like.

In some embodiments, the third node does not include the second node, and the first node may acquire second CSI between the first node and the third node based on the first CSI, where the channel transmitter corresponding to the second CSI is different from that corresponding to the first CSI.

In some embodiments, the first CSI is input into a first AI model to obtain the second CSI.

In some embodiments, the first AI model is trained by the first node, or trained by other nodes and sent to the first node, or jointly trained by the first node and other nodes.

In some embodiments, the CSI obtained by the AI model may have higher precision. Exemplarily, the first node may further acquire second CSI between the first node and the second node based on the first CSI, and the second CSI is superior to the first CSI in terms of precision and accuracy. Optionally, the first CSI represents the channel quality within a first time domain range, and the second CSI represents the channel quality within a second time domain range, where the second time domain range is later than the first time domain range in the time domain.

In some embodiments, the first node is enabled to obtain the second CSI corresponding to the third node by inputting the first CSI corresponding to the second node into the AI model without measuring the first signal from the third node, which saves the power consumption and resource overhead of the third node for transmitting the first signal and the first node for measuring the first signal from the third node, reduces the overall resource overhead and device power consumption in the communication system, and improves the efficiency of acquiring CSI in the communication system.

In some embodiments, the first node sends signals and/or data to the second node based on the first CSI, where the signals include one or more of system information, control signals, reference signals and synchronization signals.

In some embodiments, the first node sends signals and/or data to the third node based on the second CSI, where the signals include one or more of system information, control signals, reference signals and synchronization signals.

In summary, in the method provided in the embodiments of the present application, CSI is acquired by means of the first signal from the second node. Since the second node includes a low-power terminal or a low-power module, the power consumption required by the second node to transmit the first signal is extremely low or even zero, so that the overall power consumption required for acquiring CSI is significantly reduced. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI. In addition, the method supports measuring the first signal backscattered by the second node to acquire the first CSI; since there is no need to configure the second node to send the first signal periodically, the first node dynamically sends the second signal to the second node on demand to trigger the second node to backscatter the first signal, which greatly improves the flexibility of acquiring CSI, reduces the resource overhead required for scheduling the first signal, and avoids the resource waste and power consumption waste caused by the periodic transmission of the first signal by the second node.

FIG. 10 is a schematic flowchart of a method for acquiring channel state information according to an exemplary embodiment of the present application. The method is executed by a second node and includes the following operation.

At operation 1020, a first signal is transmitted or backscattered, where a measurement result of the first signal is used to acquire first CSI between a first node and the second node.

In some embodiments, the second node includes a low-power terminal or a low-power module.

Herein, the low-power terminal may also be referred to as a zero-power terminal, an ultra-low-power terminal, a Passive IoT device, or an Ambient IoT (A-IoT) device.

The low-power module may also be referred to as a zero-power module, an ultra-low-power module, a passive IoT module, or an ambient energy IoT module. Optionally, the low-power module includes one or more of a primary receiver 101, a secondary receiver 103, an energy harvesting module 321, a backscattering communication module 322, a logic processing module 323, a sensor module 324 and a memory 325. Optionally, the logic processing module 323 includes a low-power computing module.

In some embodiments, the second node is a low-power terminal. For example, the second node may be implemented as the terminal device 120 and/or the terminal device 130 as described above.

In some embodiments, the second node is a communication device including a low-power module, for example, the second node is a terminal device including a low-power module (e.g., the terminal device 120 and/or the terminal device 130 as described above), or a network device including a low-power module (e.g., the network device 110 as described above).

The second node supports a low-power communication mode, which may also be understood as that the second node has a capability of low-power communication or a low-power characteristic.

The first CSI refers to the CSI of the channel from the second node to the first node, which can reflect the channel quality or channel state from the second node to the first node.

In some embodiments, the CSI includes at least one of the following: CQI, PMI, CRI, SSBRI, Layer Indicator, Rank Indicator and L1-RSRP.

The second node is a transmitter or a backscatterer of the first signal. Exemplarily, in a downlink scenario, the transmitter or backscatterer refers to a network device (the network device as shown in FIG. 1, FIG. 2 or FIG. 3); in an uplink scenario, the transmitter or backscatterer refers to a terminal device (the terminal device as shown in FIG. 1, FIG. 2 or FIG. 3); in a sidelink scenario, the transmitter or backscatterer refers to a first terminal device (the terminal device as shown in FIG. 1, FIG. 2 or FIG. 3).

The first node is a receiver of the first signal. Exemplarily, in a downlink scenario, the receiver refers to a terminal device (the terminal device as shown in FIG. 1, FIG. 2 or FIG. 3); in an uplink scenario, the receiver refers to a network device (the network device as shown in FIG. 1, FIG. 2 or FIG. 3); in a sidelink scenario, the receiver refers to a second terminal device (the terminal device as shown in FIG. 1, FIG. 2 or FIG. 3).

In summary, the method provided in the embodiments of the present application supports acquiring CSI by the second node transmitting or backscattering the first signal. Since the second node includes a low-power terminal or a low-power module, the power consumption required by the second node to transmit the first signal is extremely low or even zero, thus reducing the overall power consumption required for the first node and the second node to acquire CSI. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI.

In some embodiments, step 1020 may be implemented as step 1022. Optionally, besides step 1022, the method for acquiring channel state information may further include step 1012 as shown in FIG. 11. FIG. 11 is a schematic flowchart of a method for acquiring channel state information according to an exemplary embodiment of the present application. The method is executed by the second node as shown in FIG. 10 and includes the following operations.

At operation 1012, first information is received, where the first information includes indication information and/or configuration information from other nodes.

The other nodes include nodes except the second node.

In some embodiments, the first information includes at least one of the following pieces of information: a transmission period of the first signal; time-domain resources corresponding to the first signal; frequency-domain resources corresponding to the first signal; a sequence corresponding to the first signal; a modulation mode of the first signal; a coding mode of the first signal.

For the relevant content of the first information, reference may be made to step 722, and details are not described herein again.

In some embodiments, the other nodes include the first node, and the second node receives the first information from the first node, where the first node may be implemented as a network device (the network device as shown in FIG. 1, FIG. 2 or FIG. 3) or a terminal device (the terminal device as shown in FIG. 1, FIG. 2 or FIG. 3).

In some embodiments, the other nodes do not include the first node, and the second node receives the first information from the other nodes, where the other nodes may be implemented as a network device (the network device as shown in FIG. 1, FIG. 2 or FIG. 3) or a terminal device (the terminal device as shown in FIG. 1, FIG. 2 or FIG. 3).

At operation 1022, the first signal is transmitted to the first node, where a measurement result of the first signal is used to acquire first CSI between the first node and the second node.

In some embodiments, the second node transmits the first signal to the first node based on the first information, where the first information includes indication information and/or configuration information from other nodes, and the other nodes include nodes except the second node.

In some embodiments, the first signal carries at least one of the following pieces of information: position information configured to indicate a position of the second node; beam information configured to indicate a beam adopted by the second node for transmitting the first signal; frequency-domain resource information configured to indicate frequency-domain resources adopted by the second node for transmitting the first signal. The position information may be used to indicate an absolute position and/or a relative position of the second node.

In some embodiments, the absolute position refers to a latitude and longitude position (also referred to as an absolute geographic position). Exemplarily, the position information may indicate the absolute position of the second node through latitude and longitude or coordinates.

In some embodiments, the relative position refers to a position relative to a reference point (the reference point may be the first node or other nodes), and is also referred to as a relative geographic position. Exemplarily, the position information may indicate the relative position of the second node through coordinates, or indicate the relative position of the second node through a latitude and longitude offset value relative to the reference point. Exemplarily, the reference point is the first node; a plurality of regions are divided with the first node as the reference point within the coverage of the cell corresponding to the first node, and the relative position of the second node is indicated by a region number.

The position information carried by the first signal may be used by the first node to acquire the channel state or channel quality from the second nodes at different positions to the first node, facilitating the first node to clarify the differences or correlations between the channels corresponding to each second node.

The beam information carried by the first signal may be used by the first node to acquire the channel state or channel quality from the second nodes in different directions to the first node, facilitating the first node to clarify the differences or correlations between the channels corresponding to each beam direction.

The frequency-domain resource information carried by the first signal may be used by the first node to perform frequency offset estimation, which is conducive to improving the receiving quality and measurement accuracy of the first signal.

The second node is a transmitter of the first signal. Exemplarily, in a downlink scenario, the transmitter refers to a network device (the network device as shown in FIG. 1, FIG. 2 or FIG. 3); in an uplink scenario, the transmitter refers to a terminal device (the terminal device as shown in FIG. 1, FIG. 2 or FIG. 3); in a sidelink scenario, the transmitter refers to a first terminal device (the terminal device as shown in FIG. 1, FIG. 2 or FIG. 3).

For the relevant content of the second node, reference may be made to step 720, and details are not described herein again.

For the relevant content of the first CSI and the first node, reference may be made to the above description, and details are not described herein again.

In some embodiments, the first node also includes a low-power terminal or a low-power module.

In some embodiments, the second node further receives signals and/or data from the first node, where the signals and/or data are transmitted based on the second CSI, and the signals include one or more of system information, control signals, reference signals and synchronization signals.

In summary, the method provided in the embodiments of the present application supports acquiring CSI by the second node transmitting or backscattering the first signal. Since the second node includes a low-power terminal or a low-power module, the power consumption required by the second node to transmit the first signal is extremely low; in addition, the energy for the second node to transmit the first signal is derived from ambient energy, and even the second node does not need to be driven by its built-in battery to transmit the first signal, thus significantly reducing the overall power consumption required for acquiring CSI. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI. In addition, the efficiency of scheduling the first signal is improved and the resource overhead required for scheduling the first signal is reduced by configuring the parameters for the second node to transmit the first signal through the first information.

In some embodiments, step 1020 may be implemented as step 1024. Optionally, besides step 1024, the method for acquiring channel state information may further include step 1014 as shown in FIG. 12. FIG. 12 is a schematic flowchart of a method for acquiring channel state information according to an exemplary embodiment of the present application. The method is executed by the second node as shown in FIG. 10 and includes the following operations.

At operation 1014, a second signal is received from the first node.

At operation 1024, a first signal is backscattered, where a measurement result of the first signal is used to acquire first CSI between the first node and the second node.

The first signal is a backscattered signal of the second signal.

In some embodiments, the first signal carries at least one of the following pieces of information: position information configured to indicate a position of the second node; beam information configured to indicate a beam adopted by the second node for transmitting the first signal; frequency-domain resource information configured to indicate frequency-domain resources adopted by the second node for transmitting the first signal. The position information may be used to indicate an absolute position and/or a relative position of the second node.

In some embodiments, the absolute position refers to a latitude and longitude position (also referred to as an absolute geographic position). Exemplarily, the position information may indicate the absolute position of the second node through latitude and longitude or coordinates.

In some embodiments, the relative position refers to a position relative to a reference point (the reference point may be the first node or other nodes), and is also referred to as a relative geographic position. Exemplarily, the position information may indicate the relative position of the second node through coordinates, or indicate the relative position of the second node through a latitude and longitude offset value relative to the reference point. Exemplarily, the reference point is the first node; a plurality of regions are divided with the first node as the reference point within the coverage of the cell corresponding to the first node, and the relative position of the second node is indicated by a region number.

The position information carried by the first signal may be used by the first node to acquire the channel state or channel quality from the second nodes at different positions to the first node, facilitating the first node to clarify the differences or correlations between the channels corresponding to each second node.

The beam information carried by the first signal may be used by the first node to acquire the channel state or channel quality from the second nodes in different directions to the first node, facilitating the first node to clarify the differences or correlations between the channels corresponding to each beam direction.

The frequency-domain resource information carried by the first signal may be used by the first node to perform frequency offset estimation, which is conducive to improving the receiving quality and measurement accuracy of the first signal.

The second node is a backscatterer of the first signal. Exemplarily, in a downlink scenario, the transmitter refers to a network device (the network device as shown in FIG. 1, FIG. 2 or FIG. 3); in an uplink scenario, the transmitter refers to a terminal device (the terminal device as shown in FIG. 1, FIG. 2 or FIG. 3); in a sidelink scenario, the transmitter refers to a first terminal device (the terminal device as shown in FIG. 1, FIG. 2 or FIG. 3).

For the relevant content of the second node, reference may be made to step 720, and details are not described herein again.

For the relevant content of the first CSI and the first node, reference may be made to the above description, and details are not described herein again.

In some embodiments, the first node also includes a low-power terminal or a low-power module.

In summary, in the method provided in the embodiments of the present application, CSI is acquired by means of the first signal from the second node. Since the second node includes a low-power terminal or a low-power module, and the second node does not need to be driven by its built-in battery to backscatter the first signal and only needs a carrier provided by the first node to implement the backscattering, the overall power consumption required for acquiring CSI is significantly reduced. Compared with periodically acquiring CSI through a communication device that does not include a low-power terminal or a low-power module, the method provided in the embodiments of the present application not only saves the power consumption of the communication device, but also reduces the resource overhead of transmitting reference signals and feeding back CSI. In addition, since there is no need to configure the second node to transmit the first signal periodically, the first node dynamically sends the second signal to the second node on demand to trigger the second node to backscatter the first signal, which greatly improves the flexibility of acquiring CSI, reduces the resource overhead required for scheduling the first signal, and avoids the resource waste and power consumption waste caused by the periodic transmission of the first signal by the second node.

Considering the device types of the first node and the second node, the method for acquiring channel state information provided in the present application includes at least the following five cases:
Case 1: The first node is a network device, the second node is a terminal device, and the second node is a low-power terminal;
Case 2: The first node is a network device, the second node is a terminal device, and the second node includes a low-power module;
Case 3: The first node is a terminal device, the second node is a network device, and the second node includes a low-power module;
Case 4: The first node is a low-power terminal or includes a low-power module, and the second node is a low-power terminal or includes a low-power module, where the first node is a terminal device and the second node is a network device, or the first node is a network device and the second node is a terminal device;
Case 5: The first node is a terminal device, the second node is a terminal device, and the second node is a low-power terminal or includes a low-power module.

The methods for acquiring channel state information in the five cases are described respectively below.

Case 1: The first node is a network device, the second node is a terminal device, and the second node is a low-power terminal.

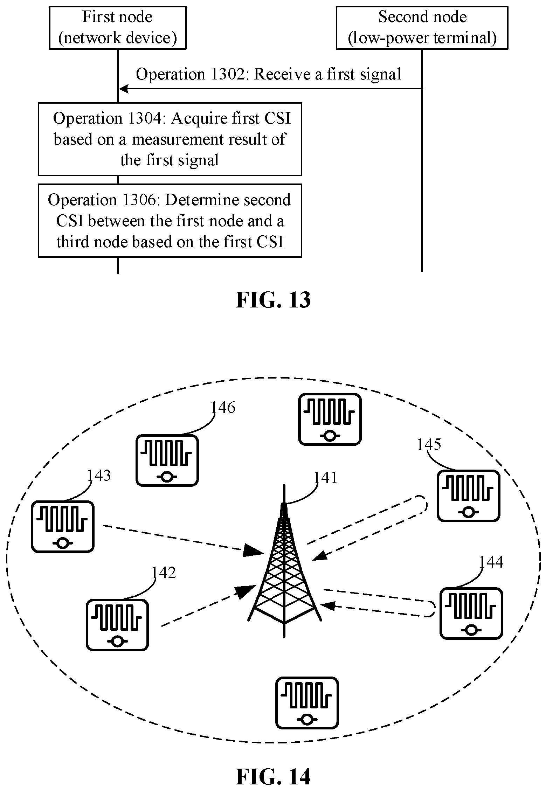

FIG. 13 is a schematic flowchart of a method for acquiring channel state information according to an exemplary embodiment of the present application. The method is executed by the first node as shown in FIG. 7 and the second node as shown in FIG. 10 and includes the following operations.

At operation 1302, the first node receives a first signal from a second node, where the second node is a low-power terminal.

The first signal is transmitted or backscattered by the second node to the first node.

For the relevant content of the first signal, reference may be made to step 722, and details are not described herein again.

Exemplarily, as shown in FIG. 14, the first node is a network device 141, and the second node includes a terminal device 142, a terminal device 143, a terminal device 144 and a terminal device 145. The network device 141 receives the first signals from the terminal device 142, the terminal device 143, the terminal device 144 and the terminal device 145, where the terminal device 142 and the terminal device 143 transmit the first signals to the network device 141, and the terminal device 144 and the terminal device 145 backscatter the first signals.

In some embodiments, the network device 141 transmits the first information to the terminal device 142 and the terminal device 143, or the network device 141 transmits the first information to a plurality of terminal devices including the terminal device 142 and the terminal device 143. The terminal device 142 and the terminal device 143 transmit the first signals to the network device 141 based on the first information.

In some embodiments, the network device 141 transmits the second signals to the terminal device 144 and the terminal device 145, and the terminal device 144 and the terminal device 145 backscatter the first signals respectively.

Optionally, the second node is within the signal coverage of the first node, or the second nodes belong to the same cell.

The second node is a low-power terminal, for example, the second node may be implemented as the terminal device 120 and/or the terminal device 130 as described above.

At operation 1304, the first node acquires first CSI based on a measurement result of the first signal.

In some embodiments, the network device 141 measures the first signals transmitted by the terminal device 142 and the terminal device 143 respectively to obtain the measurement results of the first signals. In this case, the first signals pass through the uplink from the terminal device to the network device, and the measurement results of the first signals can reflect the channel quality or channel state of the uplink.

In some embodiments, the network device 141 measures the first signals backscattered by the terminal device 144 and the terminal device 145 respectively to obtain the measurement results of the first signals. In this case, the second signals pass through the downlink from the network device to the terminal device, and the first signals pass through the uplink from the terminal device to the network device; however, since the first signals are backscattered signals of the second signals, it can be considered that the measurement results of the first signals can reflect the channel quality or channel state of both the downlink and the uplink.

Therefore, the first node can obtain the corresponding relationships between a plurality of positions and CSI through the first signals from a plurality of second nodes. When the second nodes are located at different positions in a cell, the first node can obtain the corresponding relationships between different positions and CSI in the cell, that is, the network device can obtain the channel quality or channel state of the uplink and downlink channels corresponding to each position in the cell. Due to the low-cost advantage of low-power terminals, the acquisition and maintenance costs of channel state information in the cell are effectively reduced by deploying low-power terminals to enable the network device to acquire CSI of the uplink channels corresponding to different positions. In addition, the network device does not need to rely on the traditional way that a terminal measures a reference signal and feeds back CSI to acquire CSI, but realizes the acquisition of CSI by the low-power terminal transmitting or backscattering the first signal. This way not only significantly reduces the power consumption on the terminal device side due to the low-power advantage of the low-power terminal, but also improves the flexibility of CSI acquisition in the system because the network device can provide the second signal to the low-power terminal dynamically on demand, enabling the low-power terminal to backscatter the first signal for CSI acquisition, and also reduces the resource overhead caused by periodic transmission of reference signals and CSI.

At operation 1306, the first node determines second CSI between the first node and a third node based on the first CSI.

The third node may include or exclude the second node.

Taking the case where the third node includes the second node as an example, the first node acquires the first CSI based on the received first signal and determines the second CSI according to the first CSI, where the second CSI is superior to the first CSI in terms of precision and accuracy. Optionally, the first CSI represents the channel quality within a first time domain range, and the second CSI represents the channel quality within a second time domain range, where the second time domain range is later than the first time domain range in the time domain.

Taking the case where the third node does not include the second node as an example, the first node determines the second CSI based on the first CSI, and the channel transmitters corresponding to the first CSI and the second CSI are different. Exemplarily, the third node is the terminal device 146 as shown in FIG. 14, and the network device 141 determines the channel quality or channel state of the uplink from the terminal device 146 to the network device 141 based on the first CSI. Since the second CSI corresponding to the third node can be obtained without measuring the first signal from the third node, the power consumption and resource overhead of the third node for transmitting the first signal and the first node for measuring the first signal from the third node are saved, the overall resource overhead and device power consumption in the communication system are reduced, and the efficiency of acquiring CSI in the communication system is improved.

In some embodiments, the first node inputs the first CSI into a first AI model, and the first AI model outputs the second CSI.

In some embodiments, the first node transmits signals and/or data to the second node based on the first CSI, where the signals include one or more of system information, control signals, reference signals and synchronization signals.

In some embodiments, the first node transmits signals and/or data to the third node based on the second CSI, where the signals include one or more of system information, control signals, reference signals and synchronization signals.

It should be noted that step 1306 is an optional step.

In summary, in the method provided in the embodiments of the present application, CSI is acquired by means of the first signal from the second node. Since the second node is a low-power terminal, the power consumption required by the second node to transmit the first signal is extremely low or even zero, and the complexity of the second node is very low, thus significantly reducing the overall power consumption and improving the simplicity for the first node to acquire CSI. Compared with the method in which a traditional terminal measures a reference signal and feeds back CSI, the introduction of the low-power terminal significantly reduces the cost and complexity in the system, as well as the power consumption on the terminal side and the resource overhead of reference signals and CSI. If the parameters for the second node to transmit the first signal are configured through the first information, the efficiency of scheduling the first signal can be improved and the resource overhead required for scheduling the first signal can be reduced. It also supports the first node to dynamically send the second signal to the second node on demand to trigger the second node to backscatter the first signal, which greatly improves the flexibility of acquiring CSI, reduces the resource overhead required for scheduling the first signal, and avoids the resource waste and power consumption waste caused by the periodic transmission of the first signal by the second node.

Case 2: The first node is a network device, the second node is a terminal device, and the second node includes a low-power module.

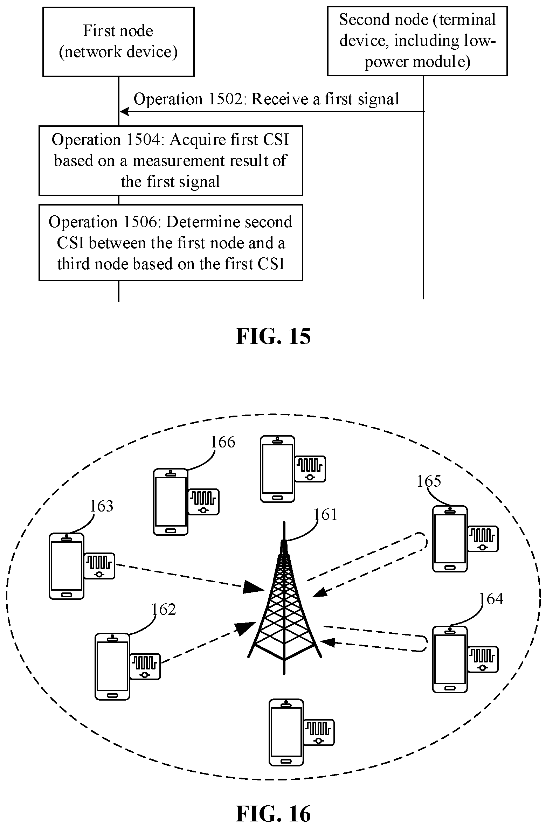

FIG. 15 is a schematic flowchart of a method for acquiring channel state information according to an exemplary embodiment of the present application. The method is executed by the first node as shown in FIG. 7 and the second node as shown in FIG. 10 and includes the following operations.

At operation 1502, the first node receives a first signal from a second node, where the second node includes a low-power module.

The first signal is transmitted or backscattered by the second node to the first node.

For the relevant content of the first signal, reference may be made to step 722, and details are not described herein again.

Exemplarily, as shown in FIG. 16, the first node is a network device 161, and the second node includes a terminal device 162, a terminal device 163, a terminal device 164 and a terminal device 165. The network device 161 receives the first signals from the terminal device 162, the terminal device 163, the terminal device 164 and the terminal device 165, where the terminal device 162 and the terminal device 163 transmit the first signals to the network device 161, and the terminal device 164 and the terminal device 165 backscatter the first signals.

In some embodiments, the network device 161 transmits the first information to the terminal device 162 and the terminal device 163, or the network device 161 transmits the first information to a plurality of terminal devices including the terminal device 162 and the terminal device 163. The terminal device 162 and the terminal device 163 transmit the first signals to the network device 161 based on the first information.

In some embodiments, the network device 161 transmits the second signals to the terminal device 164 and the terminal device 165, and the terminal device 164 and the terminal device 165 backscatter the first signals respectively.

Optionally, the second node is within the signal coverage of the first node, or the second nodes belong to the same cell.

The second node is a terminal including a low-power module 1601, that is, the low-power module 1601 is a part of the second node, so the second node also has the capability of low-power communication. The first signal transmitted or backscattered by the second node is executed by the low-power module, so the power consumption required by the second node to transmit the first signal is extremely low or even zero.

At operation 1504, the first node acquires first CSI based on a measurement result of the first signal.

In some embodiments, the network device 161 measures the first signals transmitted by the terminal device 162 and the terminal device 163 respectively to obtain the measurement results of the first signals. In this case, the first signals pass through the uplink from the terminal device to the network device, and the measurement results of the first signals can reflect the channel quality or channel state of the uplink.

In some embodiments, the network device 161 measures the first signals backscattered by the terminal device 164 and the terminal device 165 respectively to obtain the measurement results of the first signals. In this case, the second signals pass through the downlink from the network device to the terminal device, and the first signals pass through the uplink from the terminal device to the network device; however, since the first signals are backscattered signals of the second signals, it can be considered that the measurement results of the first signals can reflect the channel quality or channel state of both the downlink and the uplink.

Therefore, the first node can obtain the corresponding relationships between a plurality of positions and CSI through the first signals from a plurality of second nodes. When the second nodes are located at different positions in a cell, the first node can obtain the corresponding relationships between different positions and CSI in the cell, that is, the network device can obtain the channel quality or channel state of the uplink and downlink channels corresponding to each position in the cell. Due to the low-cost advantage of the low-power module, the acquisition and maintenance costs of channel state information in the cell are effectively reduced by introducing the low-power module to enable the network device to acquire CSI of the uplink and downlink channels corresponding to different positions. In addition, the network device does not need to rely on the traditional way that a terminal measures a reference signal and feeds back CSI to acquire CSI, but realizes the acquisition of CSI by the low-power terminal transmitting or backscattering the first signal. This way not only significantly reduces the power consumption on the terminal device side due to the low-power advantage of the low-power terminal, but also improves the flexibility of CSI acquisition in the system because the network device can provide the second signal to the low-power terminal dynamically on demand, enabling the low-power terminal to backscatter the first signal for CSI acquisition, and also reduces the resource overhead caused by periodic transmission of reference signals and CSI.

At operation 1506, the first node determines second CSI between the first node and a third node based on the first CSI.

The third node may include or exclude the second node.

Taking the case where the third node includes the second node as an example, the first node acquires the first CSI based on the received first signal and determines the second CSI according to the first CSI, where the second CSI is superior to the first CSI in terms of precision and accuracy. Optionally, the first CSI represents the channel quality within a first time domain range, and the second CSI represents the channel quality within a second time domain range, where the second time domain range is later than the first time domain range in the time domain.

Taking the case where the third node does not include the second node as an example, the first node determines the second CSI based on the first CSI, and the channel transmitters corresponding to the first CSI and the second CSI are different. Exemplarily, the third node is the terminal device 166 as shown in FIG. 16, and the network device 161 determines the channel quality or channel state of the uplink from the terminal device 166 to the network device 161 based on the first CSI. Since the second CSI corresponding to the third node can be obtained without measuring the first signal from the third node, the power consumption and resource overhead of the third node for transmitting the first signal and the first node for measuring the first signal from the third node are saved, the overall resource overhead and device power consumption in the communication system are reduced, and the efficiency of acquiring CSI in the communication system is improved.

In some embodiments, the first node inputs the first CSI into a first AI model, and the first AI model outputs the second CSI.

In some embodiments, the first node transmits signals and/or data to the second node based on the first CSI, where the signals include one or more of system information, control signals, reference signals and synchronization signals.

In some embodiments, the first node transmits signals and/or data to the third node based on the second CSI, where the signals include one or more of system information, control signals, reference signals and synchronization signals.

Since the low-power module is a part of the second node, when the first node schedules the second node for uplink or downlink transmission, it is not necessary to consider the positional relationship between the low-power module and the second node, and transmission can be performed directly according to the first CSI, making the CSI relied on by the second node for uplink or downlink transmission more direct and accurate. That is, compared with the case shown in FIG. 14 where the second node is a low-power terminal distinguished from a traditional terminal, the second node including a low-power module shown in FIG. 16 has both the communication functions of a low-power terminal and a traditional terminal. When the network device intends to schedule a traditional terminal for transmission, it is not necessary to consider the CSI error caused by the positional distance between the traditional terminal and the low-power terminal, and the first CSI obtained through the first signal transmitted by the low-power module can be directly used to schedule the second node as a traditional terminal for uplink and downlink transmission, so that the second node relies on direct and accurate CSI when implementing the communication function of a traditional terminal.

It should be noted that step 1506 is an optional step.

In summary, in the method provided in the embodiments of the present application, CSI is acquired by means of the first signal from the second node. Since the second node includes a low-power module, the power consumption required by the low-power module in the second node to transmit the first signal is extremely low or even zero, and the complexity of the low-power module is very low, thus significantly reducing the overall power consumption and improving the simplicity for the first node to acquire CSI. Compared with the method in which a traditional terminal measures a reference signal and feeds back CSI, the introduction of the low-power module significantly reduces the cost and complexity in the system, as well as the power consumption on the terminal side and the resource overhead of reference signals and CSI. If the parameters for the second node to transmit the first signal are configured through the first information, the efficiency of scheduling the first signal can be improved and the resource overhead required for scheduling the first signal can be reduced. It also supports the first node to dynamically send the second signal to the second node on demand to trigger the second node to backscatter the first signal, which greatly improves the flexibility of acquiring CSI, reduces the resource overhead required for scheduling the first signal, and avoids the resource waste and power consumption waste caused by the periodic transmission of the first signal by the second node.

Case 3: The first node is a terminal device, the second node is a network device, and the second node includes a low-power module

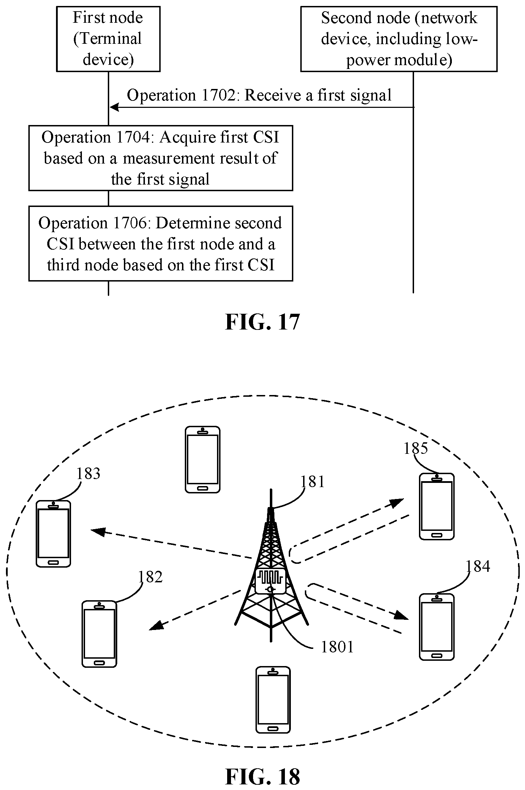

FIG. 17 is a schematic flowchart of a method for acquiring channel state information according to an exemplary embodiment of the present application. The method is executed by the first node shown in FIG. 7 and the second node shown in FIG. 10, and the method includes the following operations.

At operation 1702, the first node receives a first signal from a second node, where the second node includes a low-power module.

The first signal is transmitted or backscattered by the second node to the first node.

The relevant content of the first signal may refer to step 722, and details are not described herein again.

Exemplarily, as shown in FIG. 18, the first node includes a terminal device 182, a terminal device 183, a terminal device 184, a terminal device 185, and the second node is a network device 181. The network device 181 transmits the first signal to the terminal device 182 and the terminal device 183, and backscatters the first signal to the terminal device 184 and the terminal device 185.

In some embodiments, the network device 181 transmits the first signal to the terminal device 182 and the terminal device 183 based on the first information.

In some embodiments, the terminal device 184 and the terminal device 185 transmit a second signal to the network device 181, and the network device 181 backscatters the first signal to the terminal device 184 and the terminal device 185 respectively.

Optionally, the first node is located within the signal coverage of the second node, or the first nodes belong to the same cell.

The second node is a network device including a low-power module 1801, that is, the low-power module 1801 is a part of the second node, so the second node also has the capability of low-power communication. The first signal transmitted or backscattered by the second node is executed by the low-power module, so the power consumption required by the second node to transmit the first signal is extremely low or even zero.

At operation 1704, the first node acquires first CSI based on a measurement result of the first signal.

In some embodiments, the terminal device 182 and the terminal device 183 respectively measure the received first signal to acquire the measurement result of the first signal. In this case, the first signal passes through the downlink from the network device to the terminal device, and the measurement result of the first signal can reflect the channel quality or channel state of the downlink.

In some embodiments, the terminal device 184 and the terminal device 185 respectively measure the received first signal to acquire the measurement result of the first signal. In this case, the second signal passes through the uplink from the terminal device to the network device, and the first signal passes through the downlink from the network device to the terminal device; however, since the first signal is a backscattered signal of the second signal, it can be considered that the measurement result of the first signal can reflect the channel quality or channel state of both the uplink and the downlink.

Therefore, several first nodes can obtain the corresponding relationships between several positions and CSI through the first signals from the second node. When the first nodes are located at different positions in a cell, the corresponding relationships between different positions and CSI in the cell can be obtained, that is, the channel quality or channel state of the uplink and downlink channels corresponding to each position in the cell can be obtained. Due to the low-cost advantage of the low-power module, the introduction of the low-power module to acquire CSI of the uplink and downlink channels corresponding to different positions effectively reduces the acquisition cost and maintenance cost of channel state information in the cell.

If the terminal device reports the first CSI obtained by measuring the first signal to the network device, it is beneficial for the network device to schedule the terminal device for uplink and downlink transmission in a more reasonable manner and with appropriate resources based on the first CSI fed back by the terminal device.

If the terminal device does not report the first CSI obtained by measuring the first signal to the network device, the resource overhead of feeding back CSI can be reduced. The terminal device can directly perform grant-free uplink transmission based on the first CSI, such as Configured Grant transmission.

In addition, the terminal device does not need to rely on the traditional way where a network device measures a reference signal and feeds back CSI information to acquire CSI, but realizes the acquisition of CSI through the low-power module of the network device transmitting or backscattering the first signal. This way not only significantly reduces the power consumption on the network device side due to the low-power advantage of the low-power module, but also improves the flexibility of CSI acquisition in the system because the terminal device can dynamically provide the second signal to the low-power module on demand, enabling the low-power module to backscatter the first signal to acquire CSI, and also reduces the resource overhead of the network device scheduling the terminal device to acquire CSI.

The transmission or backscattering of the first signal by the network device may be performed periodically. In this case, the periodic transmission of the first signal can be implemented based on the configuration of the network device itself, so that the channel state information between the network device and the terminal device is periodically acquired, updated and maintained in the system.

The transmission or backscattering of the first signal by the network device may also be performed aperiodically. In this case, the aperiodic transmission of the first signal can be implemented based on the semi-static configuration of the network device itself, or the aperiodic transmission of the first signal can be implemented based on the dynamic triggering of the second signal, which can significantly reduce the resource overhead of the network device scheduling the terminal device to acquire CSI and reduce the resource overhead caused by the periodic feedback of CSI information.

At operation 1706, the first node determines second CSI between the first node and a third node based on the first CSI.

The third node may include the second node or not include the second node.

Taking the third node including the second node as an example, the first node acquires the first CSI based on the received first signal and determines the second CSI according to the first CSI, where the precision and accuracy of the second CSI are better than those of the first CSI. Optionally, the first CSI represents the channel quality within a first time domain range, and the second CSI represents the channel quality within a second time domain range, where the second time domain range is later than the first time domain range in the time domain.

In some embodiments, the first node inputs the first CSI into a first AI model, and the first AI model outputs the second CSI.

In some embodiments, the first node transmits signals and/or data to the second node based on the first CSI. The signals include one or more of system information, control signals, reference signals, and synchronization signals.

In some embodiments, the first node transmits signals and/or data to the third node based on the second CSI. The signals include one or more of system information, control signals, reference signals, and synchronization signals.

Since the low-power module is a part of the second node, when uplink or downlink transmission is performed between the first node and the second node, there is no need to consider the positional relationship between the low-power module and the second node, and transmission can be performed directly according to the first CSI, making the CSI relied on by the second node for uplink or downlink transmission more direct and accurate. That is to say, the second node including the low-power module has both the communication functions of the low-power module and the traditional network device. When the network device 181 intends to realize the communication function of the traditional network device, there is no need to consider the CSI error caused by the positional distance, and the first CSI obtained through the first signal transmitted by the low-power module can be directly used for uplink and downlink transmission as the traditional network device, so that the second node relies on direct and accurate CSI when realizing the communication function of the traditional network device.

It should be noted that step 1706 is an optional step.

In summary, the method provided by the embodiment of the present application acquires CSI through the first signal from the second node. Since the second node includes a low-power module, the power consumption required by the low-power module in the second node to transmit the first signal is extremely low or even zero, and the complexity of the low-power module is very low, which significantly reduces the overall power consumption required for the first node to acquire CSI and improves the simplicity. Compared with the traditional method of measuring reference signals and feeding back CSI information, the introduction of the low-power module significantly reduces the cost and complexity in the system, as well as the power consumption on the terminal side and the resource overhead of reference signals and CSI information. Moreover, in the case where the second node is a network device including a low-power module, the method provided by the embodiment of the present application is particularly suitable for the grant-free uplink transmission of the terminal device. The terminal device can independently, dynamically and flexibly acquire CSI through the first signal, and then adopt appropriate transmission parameters based on the CSI.

Case 4: The first node is a low-power terminal or includes a low-power module, and the second node is a low-power terminal or includes a low-power module, where the first node is a terminal device and the second node is a network device, or the first node is a network device and the second node is a terminal device

Case 4 can be regarded as a combination of the embodiment shown in FIG. 13 and the embodiment shown in FIG. 17, or a combination of the embodiment shown in FIG. 15 and the embodiment shown in FIG. 17. That is to say, both the network device and the terminal device can acquire the first CSI through the first signal from each other. For specific steps, reference may be made to the embodiments shown in FIG. 13, FIG. 15 and FIG. 17, and details are not described herein again.

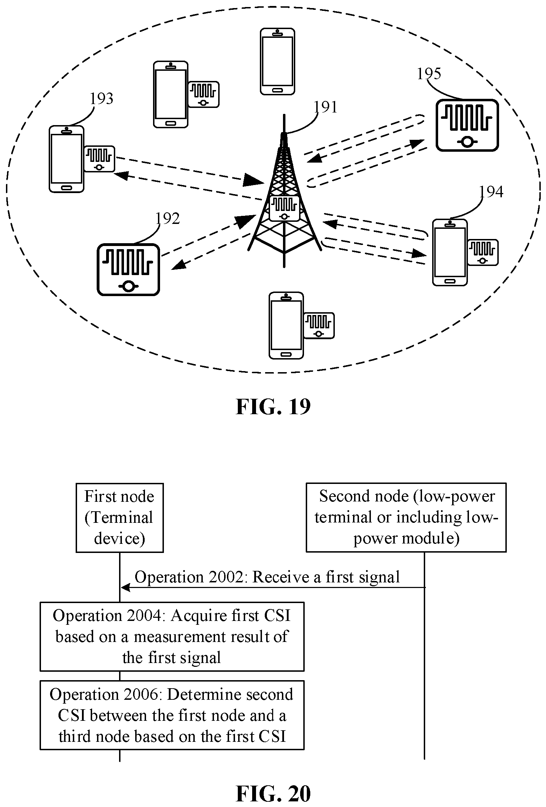

Exemplarily, as shown in FIG. 19, the first node includes a terminal device 192, a terminal device 193, a terminal device 194, a terminal device 195, and the second node is a network device 191.

The network device 191 may transmit the first signal to the terminal device 192 and the terminal device 193, and backscatter the first signal to the terminal device 194 and the terminal device 195, so that the terminal device 192, the terminal device 193, the terminal device 194, and the terminal device 195 acquire CSI corresponding to the downlink based on the first signal.

In some embodiments, the network device 191 transmits the first signal to the terminal device 192 and the terminal device 193 based on the first information.

In some embodiments, the terminal device 194 and the terminal device 195 transmit a second signal to the network device 191, and the network device 191 backscatters the first signal to the terminal device 194 and the terminal device 195 respectively.

The network device 191 may also receive the first signal transmitted by the terminal device 192 and the terminal device 193, and receive the first signal backscattered by the terminal device 194 and the terminal device 195, so that the network device 191 acquires CSI corresponding to the uplink.

In some embodiments, the terminal device 192 and the terminal device 193 transmit the first signal to the network device 191 based on the first information.

In some embodiments, the network device 191 transmits a second signal to the terminal device 194 and the terminal device 195, and the terminal device 194 and the terminal device 195 respectively backscatter the first signal.

Optionally, the terminal device 192, the terminal device 193, the terminal device 194, and the terminal device 195 are located within the signal coverage of the network device 191, or the terminal device 192, the terminal device 193, the terminal device 194, and the terminal device 195 belong to the same cell.

Therefore, the transmission of the first signal between the network device and several terminal devices can obtain the corresponding relationships between several positions and CSI. When several terminal devices are located at different positions in a cell, the corresponding relationships between different positions and CSI in the cell can be obtained, that is, the channel quality or channel state of the uplink and downlink channels corresponding to each position in the cell can be obtained. Due to the low-cost advantage of the low-power module or low-power terminal, the introduction of the low-power module or low-power terminal to acquire CSI of the uplink and downlink channels corresponding to different positions effectively reduces the acquisition cost and maintenance cost of channel state information in the cell.

If the terminal device reports the first CSI obtained by measuring the first signal to the network device, it is beneficial for the network device to schedule the terminal device for uplink and downlink transmission in a more reasonable manner and with appropriate resources based on the first CSI fed back by the terminal device.

If the terminal device does not report the first CSI obtained by measuring the first signal to the network device, the resource overhead of feeding back CSI can be reduced. The terminal device can directly perform grant-free uplink transmission based on the first CSI, such as Configured Grant transmission.

In addition, neither the terminal device nor the network device needs to rely on the traditional way where traditional devices measure reference signals and feed back CSI information to acquire CSI, but realizes the acquisition of CSI through the low-power module or low-power terminal. This way not only significantly reduces the power consumption in the communication system due to the low-power advantage, but also improves the flexibility of CSI acquisition in the system because the terminal device and the network device can dynamically provide the second signal to each other on demand, enabling the low-power module to backscatter the first signal to acquire CSI, and also reduces the resource overhead of the network device scheduling the terminal device to acquire CSI.

The transmission or backscattering of the first signal by the second node may be performed periodically. In this case, the periodic transmission of the first signal can be implemented based on the configuration of the network device or other nodes, so that the channel state information between the network device and the terminal device is periodically acquired, updated and maintained in the system.

The transmission or backscattering of the first signal by the second node may also be performed aperiodically. In this case, the aperiodic transmission of the first signal can be implemented based on the semi-static configuration of the network device or other nodes, or the aperiodic transmission of the first signal can be implemented based on the dynamic triggering of the second signal, which can significantly reduce the resource overhead of the network device scheduling the terminal device to acquire CSI and reduce the resource overhead caused by the periodic feedback of CSI information.

The network device may also determine the second CSI based on the first CSI. For details, reference may be made to step 1306 or step 1506, and details are not described herein again.

In some embodiments, the network transmits signals and/or data to the terminal device based on the first CSI. The signals include one or more of system information, control signals, reference signals, and synchronization signals.

In some embodiments, the network transmits signals and/or data to the terminal device based on the second CSI. The signals include one or more of system information, control signals, reference signals, and synchronization signals.

In summary, the method provided by the embodiment of the present application allows both the first node and the second node to acquire CSI through the first signal from each other. Since both the first node and the second node have low-power characteristics, the power consumption required to transmit the first signal is extremely low or even zero, which significantly reduces the overall power consumption required to acquire CSI in the communication system. Compared with the traditional method of measuring reference signals and feeding back CSI information, the introduction of the low-power module or low-power terminal significantly reduces the cost and complexity in the system, as well as the power consumption on the terminal side, the power consumption on the network device side, and the resource overhead of reference signals and CSI information.

The effects achievable by the embodiments shown in FIG. 13, FIG. 15, and FIG. 17 can also be achieved by the embodiment shown in FIG. 19.

Case 5: The first node is a terminal device, the second node is a terminal device, and the second node is a low-power terminal or includes a low-power module

FIG. 20 shows a schematic flowchart of a method for acquiring channel state information according to an exemplary embodiment of the present application. The method is executed by the first node shown in FIG. 7 and the second node shown in FIG. 10, and the method includes:

At operation 2002, the first node receives a first signal from a second node, where the second node is a low-power terminal or includes a low-power module.

The first signal is transmitted or backscattered by the second node to the first node.

The relevant content of the first signal may refer to step 722, and details are not described herein again.

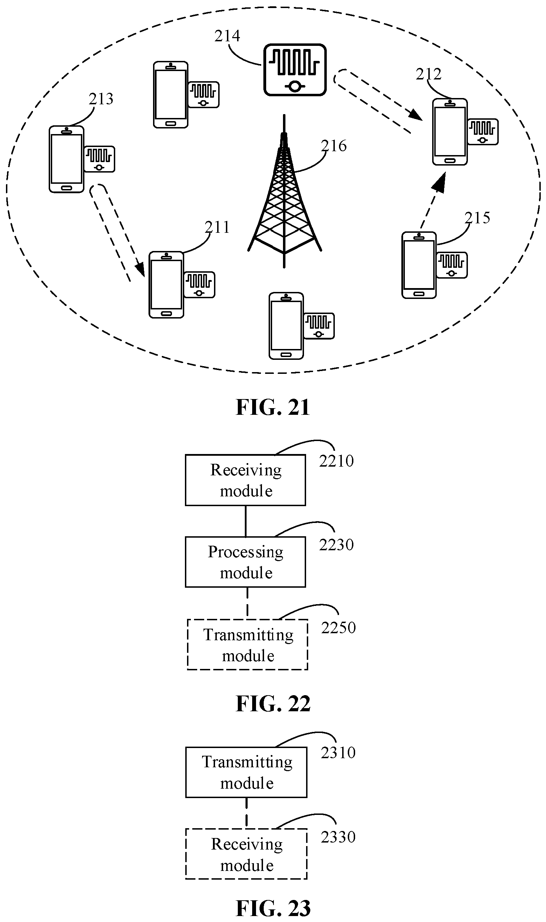

Exemplarily, as shown in FIG. 21, the first node is a terminal device 211 and a terminal device 212, and the second node includes a terminal device 213, a terminal device 214, and a terminal device 215. The terminal device 211 receives the first signal backscattered by the terminal device 213, the terminal device 212 receives the first signal backscattered by the terminal device 214, and the terminal device 212 receives the first signal transmitted by the terminal device 215.

In some embodiments, the network device 216 transmits the first information to the terminal device 215, or the network device 216 transmits the first information to a plurality of terminal devices including the terminal device 215. The terminal device 215 transmits the first signal to the terminal device 212 based on the first information.

In some embodiments, the terminal device 211 transmits a second signal to the terminal device 213, and the terminal device 213 backscatters the first signal. The terminal device 212 transmits a second signal to the terminal device 214, and the terminal device 214 backscatters the first signal.

Optionally, the first node and the second node belong to the same cell, or are located within the signal coverage of the same base station.

At operation 2004, the first node acquires first CSI based on a measurement result of the first signal.

In some embodiments, the terminal device 211 measures the first signal backscattered by the terminal device 213 to acquire the measurement result of the first signal. In this case, the second signal passes through the first sidelink from the terminal device 211 to the terminal device 213, and the first signal passes through the second sidelink from the terminal device 213 to the terminal device 211; however, since the first signal is a backscattered signal of the second signal, it can be considered that the measurement result of the first signal can reflect the channel quality or channel state of both the first sidelink and the second sidelink.

In some embodiments, the terminal device 212 measures the first signal backscattered by the terminal device 214 to acquire the measurement result of the first signal. In this case, the second signal passes through the first sidelink from the terminal device 212 to the terminal device 214, and the first signal passes through the second sidelink from the terminal device 214 to the terminal device 212; however, since the first signal is a backscattered signal of the second signal, it can be considered that the measurement result of the first signal can reflect the channel quality or channel state of both the first sidelink and the second sidelink.

In some embodiments, the terminal device 212 measures the first signal transmitted by the terminal device 215 to acquire the measurement result of the first signal. In this case, the first signal passes through the second sidelink from the terminal device 215 to the terminal device 211, and the measurement result of the first signal can reflect the channel quality or channel state of the sidelink.

Therefore, the transmission of the first signal between several second nodes and the first node can obtain the corresponding relationships between several positions and CSI. When the second nodes are located at different positions in a cell, the corresponding relationships between different positions and CSI in the cell can be obtained, that is, the channel quality or channel state of the sidelink channels corresponding to each position in the cell can be obtained. Due to the low-cost advantage of the low-power terminal/low-power module, the deployment of the low-power terminal/low-power module to acquire CSI of the sidelink channels corresponding to different positions effectively reduces the acquisition cost and maintenance cost of channel state information in the cell.

It should be noted that, similar to the embodiment shown in FIG. 19, the first node may also be a low-power terminal or include a low-power module. Therefore, both the first node and the second node can acquire CSI through the first signal from each other. Since both the first node and the second node have low-power characteristics, the power consumption required to transmit the first signal is extremely low or even zero, which significantly reduces the overall power consumption required to acquire CSI in the communication system.

It not only supports the first node and the second node to transmit the first signal based on the first information, improves the efficiency of scheduling the first signal, and reduces the resource overhead required for scheduling the first signal; but also supports the first node and the second node to dynamically provide the second signal to each other on demand, enabling each other to backscatter the first signal to acquire CSI, which improves the flexibility of CSI acquisition in the system and reduces the resource overhead caused by the periodic transmission of reference signals and CSI information.

At operation 2006, the first node determines second CSI between the first node and a third node based on the first CSI.

The third node may include the second node or not include the second node.

Taking the third node including the second node as an example, the first node acquires the first CSI based on the received first signal and determines the second CSI according to the first CSI, where the precision and accuracy of the second CSI are better than those of the first CSI. Optionally, the first CSI represents the channel quality within a first time domain range, and the second CSI represents the channel quality within a second time domain range, where the second time domain range is later than the first time domain range in the time domain.

Taking the third node not including the second node as an example, the first node determines the second CSI based on the first CSI, and the channel transmitters corresponding to the first CSI and the second CSI are different. Since the second CSI corresponding to the third node can be obtained without measuring the first signal from the third node, the power consumption and resource overhead of the third node transmitting the first signal and the first node measuring the first signal from the third node are saved, the overall resource overhead and device power consumption in the communication system are reduced, and the efficiency of acquiring CSI in the communication system is improved.

In some embodiments, the first node inputs the first CSI into a first AI model, and the first AI model outputs the second CSI.

It should be noted that step 2006 is an optional step.

In some embodiments, the first node transmits signals and/or data to the second node based on the first CSI. The signals include one or more of system information, control signals, reference signals, and synchronization signals.

In some embodiments, the first node transmits signals and/or data to the third node based on the second CSI. The signals include one or more of system information, control signals, reference signals, and synchronization signals.

In some embodiments, the first node also reports the first CSI and/or the second CSI to the network device, so as to facilitate the network device to understand the channel quality or channel state of each sidelink channel in the cell. Optionally, the network device configures a resource pool for the first node and the second node based on the first CSI and/or the second CSI reported by the first node, so that the first node and the second node adopt appropriate resources for sidelink transmission.

In summary, the method provided by the embodiment of the present application acquires CSI of the sidelink channel through the first signal. Since the second node is a low-power terminal or includes a low-power module, the power consumption required by the second node to transmit the first signal is extremely low or even zero, which significantly reduces the overall power consumption required for the first node to acquire CSI. When the first node is also a low-power terminal or includes a low-power module, both the first node and the second node can acquire CSI through the first signal from each other, which further reduces the overall power consumption required to acquire CSI in the communication system. Compared with the traditional method of measuring reference signals and feeding back CSI information, the introduction of the low-power module or low-power terminal significantly reduces the cost and complexity in the system, as well as the power consumption on the terminal side and the resource overhead of reference signals and CSI information.

FIG. 22 shows a structural block diagram of an apparatus for acquiring channel state information according to an exemplary embodiment of the present application. The apparatus may be implemented as the first node shown in FIG. 7, FIG. 8, or FIG. 9, or as a part of the first node shown in FIG. 7, FIG. 8, or FIG. 9. The first node may be a network device shown in FIG. 1, FIG. 2, or FIG. 3, or a terminal device shown in FIG. 1, FIG. 2, or FIG. 3. The apparatus includes a receiving module 2210 and a processing module 2230. Optionally, the apparatus further includes a transmitting module 2250.

The receiving module 2210 is configured to receive a first signal from a second node, where the second node includes a low-power terminal or a low-power module;

The processing module 2230 is configured to acquire first Channel State Information (CSI) between the apparatus and the second node based on a measurement result of the first signal.

In some embodiments, the first signal is transmitted by the second node to the apparatus.

In some embodiments, the first signal is transmitted by the second node to the apparatus based on first information.

Here, the first information includes indication information and/or configuration information from other nodes, and the other nodes include nodes other than the second node.

In some embodiments, the first information includes at least one of the following information: the transmission period of the first signal; the time-domain resources corresponding to the first signal; the frequency-domain resources corresponding to the first signal; the sequence corresponding to the first signal; the modulation mode of the first signal; or the coding mode of the first signal.

In some embodiments, the first signal is backscattered by the second node.

In some embodiments, the apparatus further includes a transmitting module 2250 configured to transmit a second signal to the second node, where the first signal is a backscattered signal of the second signal.

In some embodiments, the first signal carries at least one of the following information:
position information for indicating the position of the second node;
beam information for indicating the beam adopted by the second node to backscatter the first signal; or
frequency-domain resource information for indicating the frequency-domain resources adopted by the second node to transmit or backscatter the first signal.

In some embodiments, the processing module 2230 is further configured to determine second CSI based on the first CSI.

Here, the second CSI is CSI between the apparatus and a third node, and the third node includes nodes other than the apparatus.

In some embodiments, the processing module 2230 is further configured to input the first CSI into a first AI model to obtain the second CSI.

In some embodiments, the transmitting module 2250 is further configured to transmit signals and/or data based on the first CSI; and/or transmit signals and/or data based on the second CSI.

Here, the second CSI is CSI between the apparatus and a third node, and the third node includes nodes other than the apparatus.

In some embodiments, the apparatus includes a low-power terminal or a low-power module.

In summary, the apparatus provided by the embodiment of the present application acquires CSI through the first signal from the second node. Since the second node includes a low-power terminal or a low-power module, the power consumption required by the second node to transmit the first signal is extremely low or even zero, which significantly reduces the overall power consumption required to acquire CSI. Compared with periodically acquiring CSI through a communication device that does not include a low-power terminal or a low-power module, the method provided by the embodiment of the present application not only saves the power consumption of the communication device, but also reduces the resource overhead of transmitting reference signals and feeding back CSI information.

FIG. 23 shows a structural block diagram of an apparatus for acquiring channel state information according to an exemplary embodiment of the present application. The apparatus may be implemented as the second node shown in FIG. 10, FIG. 11, or FIG. 12, or as a part of the second node shown in FIG. 10, FIG. 11, or FIG. 12. The second node may be a network device shown in FIG. 1, FIG. 2, or FIG. 3, or a terminal device shown in FIG. 1, FIG. 2, or FIG. 3. The apparatus includes a transmitting module 2310. Optionally, the apparatus further includes a receiving module 2330.

The transmitting module 2310 is configured to transmit or backscatter a first signal, where a measurement result of the first signal is used to acquire first Channel State Information (CSI) between the first node and the apparatus.

Here, the apparatus includes a low-power terminal or a low-power module.

In some embodiments, the transmitting module 2310 is further configured to transmit the first signal to the first node based on first information.

Here, the first information includes indication information and/or configuration information from other nodes, and the other nodes include nodes other than the apparatus.

In some embodiments, the first information includes at least one of the following information: the transmission period of the first signal; the time-domain resources corresponding to the first signal; the frequency-domain resources corresponding to the first signal; the sequence corresponding to the first signal; the modulation mode of the first signal; or the coding mode of the first signal.

In some embodiments, the apparatus further includes a receiving module 2330 configured to receive a second signal transmitted by the first node, where the first signal is a backscattered signal of the second signal.

In some embodiments, the first signal carries at least one of the following information:
position information for indicating the position of the apparatus;
beam information for indicating the beam adopted by the apparatus to backscatter the first signal; or
frequency-domain resource information for indicating the frequency-domain resources adopted by the apparatus to transmit or backscatter the first signal.

In some embodiments, the receiving module 2330 is further configured to: receive signals and/or data from the first node, where the signals and/or data are transmitted based on the first CSI; and/or receive signals and/or data from the first node, where the signals and/or data are transmitted based on the second CSI, and the second CSI is CSI between the first node and a third node.

In some embodiments, the first node includes a low-power terminal or a low-power module.

In summary, the apparatus provided by the embodiment of the present application supports acquiring CSI by transmitting or backscattering the first signal. Since the apparatus provided by the embodiment of the present application includes a low-power terminal or a low-power module, the power consumption required to transmit the first signal is extremely low, and the energy for transmitting the first signal comes from environmental energy; even the transmission of the first signal does not need to be driven by the built-in battery of the apparatus, which significantly reduces the overall power consumption required to acquire CSI. Compared with periodically acquiring CSI through a communication device that does not include a low-power terminal or a low-power module, the apparatus provided by the embodiment of the present application not only saves power consumption, but also reduces the resource overhead of transmitting reference signals and feeding back CSI information. In addition, the transmission parameters of the first signal are configured through the first information, which improves the efficiency of scheduling the first signal and reduces the resource overhead required for scheduling the first signal.

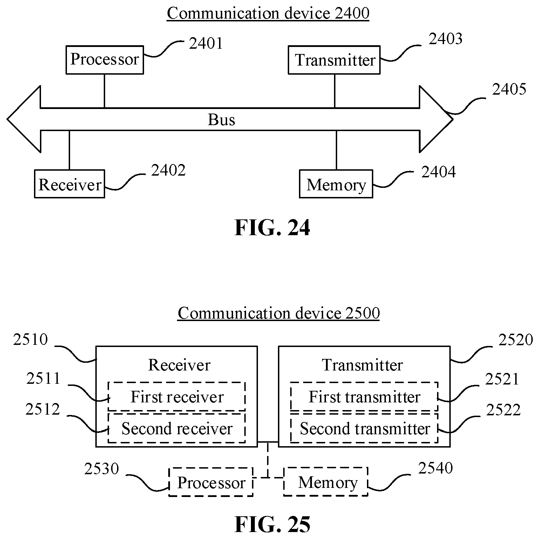

FIG. 24 shows a schematic structural diagram of a communication device 2400 according to an exemplary embodiment of the present application, including: a processor 2401, a receiver 2402, a transmitter 2403, a memory 2404, and a bus 2405. The communication device 2400 may be used to execute at least part of the steps performed by the first node shown in FIG. 7, FIG. 8, or FIG. 9, or may be used to execute at least part of the steps performed by the second node shown in FIG. 10, FIG. 11, or FIG. 12.

The processor 2401 includes one or more processing cores, and the processor 2401 executes various functional applications and information processing by running software programs and modules. In some embodiments, the processor 2401 may be used to implement the functions and steps of the aforementioned processing module 2230.

The receiver 2402 and the transmitter 2403 may be implemented as a communication component, which may be a communication chip, and the communication component may be referred to as a transceiver. In some embodiments, the receiver 2402 may be used to implement the functions and steps of the aforementioned receiving module 2210 and/or receiving module 2330, and the transmitter 2403 may be used to implement the functions and steps of the aforementioned transmitting module 2250 and/or transmitting module 2310. In some embodiments, the receiver 2402 includes a backscattering transmitter.

The memory 2404 is connected to the processor 2401 through a bus 2405.

The memory 2404 may be used to store at least one instruction, and the processor 2401 is used to execute the at least one instruction to implement each step in the aforementioned method embodiments.

In addition, the memory 2404 may be implemented by any type of volatile or non-volatile storage device or a combination thereof. Volatile or non-volatile storage devices include but are not limited to: magnetic disks or optical disks, Electrically-Erasable Programmable Read Only Memory (EEPROM), Erasable Programmable Read Only Memory (EPROM), Static Random Access Memory (SRAM), Read-Only Memory (ROM), magnetic memory, flash memory, Programmable Read-Only Memory (PROM).

In some embodiments, the receiver 2402 independently receives signals/data, or the processor 2401 controls the receiver 2402 to receive signals/data, or the processor 2401 requests the receiver 2402 to receive signals/data, or the processor 2401 cooperates with the receiver 2402 to receive signals/data.

In some embodiments, the transmitter 2403 independently transmits signals/data, or the processor 2401 controls the transmitter 2403 to transmit signals/data, or the processor 2401 requests the transmitter 2403 to transmit signals/data, or the processor 2401 cooperates with the transmitter 2403 to transmit signals/data.

FIG. 25 shows a schematic structural diagram of a communication device 2500 according to an exemplary embodiment of the present application, including: a receiver 2510 and a transmitter 2520. The communication device 2500 may be used to execute at least part of the steps performed by the first node shown in FIG. 7, FIG. 8, or FIG. 9, or may be used to execute at least part of the steps performed by the second node shown in FIG. 10, FIG. 11, or FIG. 12.

The receiver 2510 and the transmitter 2520 may be implemented as a communication component, which may be a communication chip, and the communication component may be referred to as a transceiver.

In some embodiments, the receiver 2510 may be used to implement the functions and steps of the aforementioned receiving module 2210 and/or receiving module 2330. Optionally, the receiver 2510 may be implemented as a first receiver 2511 and/or a second receiver 2512.

In some embodiments, the transmitter 2520 may be used to implement the functions and steps of the aforementioned transmitting module 2250 and/or transmitting module 2310. Optionally, the transmitter 2520 may be implemented as a first transmitter 2521 and/or a second transmitter 2522.

Optionally, the communication device 2500 may further include a processor 2530. The processor 2530 includes one or more processing cores, and the processor 2530 executes various functional applications and information processing by running software programs and modules. Optionally, the processor 2530 may be used to implement the functions and steps of the aforementioned processing module 2230.

Optionally, the communication device 2500 may further include a memory 2540. The memory 2540 may be used to store at least one instruction, and the processor 2530 is used to execute the at least one instruction to implement each step in the aforementioned method embodiments. In addition, the memory 2540 may be implemented by any type of volatile or non-volatile storage device or a combination thereof. Volatile or non-volatile storage devices include but are not limited to: magnetic disks or optical disks, EEPROM, EPROM, SRAM, ROM, magnetic memory, flash memory, PROM.

Optionally, the communication device 2500 may further include a bus (not shown in the figure). Optionally, the memory 2540 is connected to the processor 2530 through a bus.

In some embodiments, the receiver 2510 independently receives signals/data, or the processor 2530 controls the receiver 2510 to receive signals/data, or the processor 2530 requests the receiver 2510 to receive signals/data, or the processor 2530 cooperates with the receiver 2510 to receive signals/data.

In some embodiments, the transmitter 2520 independently transmits signals/data, or the processor 2530 controls the transmitter 2520 to transmit signals/data, or the processor 2530 requests the transmitter 2520 to transmit signals/data, or the processor 2530 cooperates with the transmitter 2520 to transmit signals/data.

In some embodiments, the first receiver 2511 is implemented as a Wake-Up Radio (WUR), and/or the second receiver 2512 is implemented as a primary receiver.

In some embodiments, the receiver 2510 is implemented as a combined receiver of a Wake-Up Radio (WUR) and a primary receiver.

In some embodiments, the first transmitter 2521 is implemented as a primary transmitter, and/or the second transmitter 2522 is implemented as a backscattering transmitter.

In some embodiments, the transmitter 2520 is implemented as a combined transmitter of a primary transmitter and a backscattering transmitter.

In some embodiments, the processor 2530 and the receiver 2510 may be implemented as a module, or the processor 2530 may be implemented as a part of the receiver 2510.

In some embodiments, the processor 2530 and the transmitter 2520 may be implemented as a module, or the processor 2530 may be implemented as a part of the transmitter 2520.

In some embodiments, the communication device 2500 includes one or more processors 2530, and different processors are used to execute the same or different steps among the aforementioned processing-related steps.

In an exemplary embodiment of the present application, a computer-readable storage medium is further provided. The computer-readable storage medium stores at least one program segment, and the at least one program segment is loaded and executed by a processor to implement the method for acquiring channel state information provided in each of the aforementioned method embodiments.

In an exemplary embodiment of the present application, a chip is further provided. The chip includes a programmable logic circuit and/or program instructions, and is used to implement the method for acquiring channel state information provided in each of the aforementioned method embodiments when the chip runs on a communication device.

In an exemplary embodiment of the present application, a computer program product is further provided. When the computer program product runs on a processor of a computer device, the computer device is caused to execute the aforementioned method for acquiring channel state information.

In an exemplary embodiment of the present application, a computer program is further provided. The computer program includes computer instructions, and a processor of a computer device executes the computer instructions to cause the computer device to execute the aforementioned method for acquiring channel state information.

A person of ordinary skill in the art may understand that all or part of the steps of implementing the above embodiments may be completed by hardware, or by a program instructing relevant hardware to complete. The program may be stored in a computer-readable storage medium. The aforementioned storage medium may be a read-only memory, a magnetic disk, an optical disk, or the like.

The above are only optional embodiments of the present application and are not intended to limit the present application. Any modification, equivalent replacement, improvement, etc., made within the spirit and principle of the present application shall all fall within the protection scope of the present application.

## Claims

1. A method for acquiring channel state information, wherein the method is executed by a first node, and the method comprises:
receiving a first signal from a second node, wherein the second node comprises a low-power terminal or a low-power module;
acquiring first Channel State Information (CSI) between the first node and the second node based on a measurement result of the first signal.

2. The method according to claim 1, wherein the first signal is transmitted by the second node to the first node.

3. The method according to claim 1 or 2, wherein the first signal is transmitted by the second node to the first node based on first information;
wherein the first information comprises indication information and/or configuration information from other nodes, and the other nodes comprise nodes except the second node.

4. The method according to claim 3, wherein the first information comprises at least one of the following information:
a transmission period of the first signal;
time-domain resources corresponding to the first signal;
frequency-domain resources corresponding to the first signal;
a sequence corresponding to the first signal;
a modulation mode of the first signal; or
an encoding mode of the first signal.

5. The method according to claim 1 or 2, wherein the first signal is backscattered by the second node.

6. The method according to claim 5, wherein before receiving the first signal from the second node, the method further comprises:
transmitting a second signal to the second node, wherein the first signal is a backscattered signal of the second signal.

7. The method according to any one of claims 1 to 6, wherein the first signal carries at least one of the following information:
position information for indicating a position of the second node;
beam information for indicating a beam adopted by the second node to backscatter the first signal; or
frequency-domain resource information for indicating frequency-domain resources adopted by the second node to transmit or backscatter the first signal.

8. The method according to any one of claims 1 to 7, further comprising:
determining second CSI based on the first CSI;
wherein the second CSI is CSI between the first node and a third node, and the third node comprises nodes except the first node.

9. The method according to claim 8, wherein the step of determining the second CSI based on the first CSI comprises:
inputting the first CSI into a first AI model to obtain the second CSI.

10. The method according to any one of claims 1 to 9, further comprising:
transmitting signals and/or data based on the first CSI; and/or
transmitting signals and/or data based on second CSI;
wherein the second CSI is CSI between the first node and a third node, and the third node comprises nodes except the first node.

11. The method according to any one of claims 1 to 10, wherein the first node comprises a low-power terminal or a low-power module.

12. A method for acquiring channel state information, wherein the method is executed by a second node, and the method comprises:
transmitting or backscattering a first signal, wherein a measurement result of the first signal is used to acquire first Channel State Information (CSI) between a first node and the second node;
wherein the second node comprises a low-power terminal or a low-power module.

13. The method according to claim 12, wherein the first signal is transmitted by the second node to the first node based on first information;
wherein the first information comprises indication information and/or configuration information from other nodes, and the other nodes comprise nodes except the second node.

14. The method according to claim 13, wherein the first information comprises at least one of the following information:
a transmission period of the first signal;
time-domain resources corresponding to the first signal;
frequency-domain resources corresponding to the first signal;
a sequence corresponding to the first signal; or
a modulation mode of the first signal; or
an encoding mode of the first signal.

15. The method according to claim 12, wherein before backscattering the first signal, the method further comprises:
receiving a second signal transmitted by the first node, wherein the first signal is a backscattered signal of the second signal.

16. The method according to any one of claims 12 to 15, wherein the first signal carries at least one of the following information:
position information for indicating a position of the second node;
beam information for indicating a beam adopted by the second node to backscatter the first signal; or
frequency-domain resource information for indicating frequency-domain resources adopted by the second node to transmit or backscatter the first signal.

17. The method according to any one of claims 12 to 16, further comprising:
receiving signals and/or data from the first node, wherein the signals and/or data are transmitted based on the first CSI; and/or
receiving signals and/or data from the first node, wherein the signals and/or data are transmitted based on second CSI, and the second CSI is CSI between the first node and a third node.

18. The method according to any one of claims 12 to 17, wherein the first node comprises a low-power terminal or a low-power module.

19. An apparatus for acquiring channel state information, comprising:
a receiving module, configured to receive a first signal from a second node, wherein the second node comprises a low-power terminal or a low-power module; and
a processing module, configured to acquire first Channel State Information (CSI) between the apparatus and the second node based on a measurement result of the first signal.

20. The apparatus according to claim 19, wherein the first signal is transmitted by the second node to the apparatus.

21. The apparatus according to claim 19 or 20, wherein the first signal is transmitted by the second node to the apparatus based on first information;
wherein the first information comprises indication information and/or configuration information from other nodes, and the other nodes comprise nodes except the second node.

22. The apparatus according to claim 21, wherein the first information comprises at least one of the following information:
a transmission period of the first signal;
time-domain resources corresponding to the first signal;
frequency-domain resources corresponding to the first signal;
a sequence corresponding to the first signal;
a modulation mode of the first signal; or
an encoding mode of the first signal.

23. The apparatus according to claim 19 or 20, wherein the first signal is backscattered by the second node.

24. The apparatus according to claim 23, wherein the apparatus further comprises a transmitting module, configured to transmit a second signal to the second node, where the first signal is a backscattered signal of the second signal.

25. The apparatus according to any one of claims 19 to 24, wherein the first signal carries at least one of the following information:
position information for indicating a position of the second node;
beam information for indicating a beam adopted by the second node to backscatter the first signal; or
frequency-domain resource information for indicating frequency-domain resources adopted by the second node to transmit or backscatter the first signal.

26. The apparatus according to any one of claims 19 to 25, wherein the processing module is further configured to determine second CSI based on the first CSI;
wherein the second CSI is CSI between the apparatus and a third node, and the third node comprises nodes except the apparatus.

27. The apparatus according to claim 26, wherein the processing module is further configured to input the first CSI into a first AI model to obtain the second CSI.

28. The apparatus according to any one of claims 19 to 27, wherein the apparatus further comprises a transmitting module, configured to:
transmit signals and/or data based on the first CSI; and/or
transmit signals and/or data based on second CSI;
wherein the second CSI is CSI between the apparatus and a third node, and the third node comprises nodes except the apparatus.

29. The apparatus according to any one of claims 19 to 28, wherein the apparatus comprises a low-power terminal or a low-power module.

30. An apparatus for acquiring channel state information, wherein the apparatus comprises:
a transmitting module, configured to transmit or backscatter a first signal, wherein a measurement result of the first signal is used to acquire first Channel State Information (CSI) between a first node and the apparatus;
wherein the apparatus comprises a low-power terminal or a low-power module.

31. The apparatus according to claim 30, wherein the transmitting module is further configured to transmit the first signal to the first node based on first information;
wherein the first information comprises indication information and/or configuration information from other nodes, and the other nodes comprise nodes except the apparatus.

32. The apparatus according to claim 31, wherein the first information comprises at least one of the following information:
a transmission period of the first signal;
time-domain resources corresponding to the first signal;
frequency-domain resources corresponding to the first signal;
a sequence corresponding to the first signal;
a modulation mode of the first signal; or
an encoding mode of the first signal.

33. The apparatus according to claim 30, wherein the apparatus further comprises a receiving module, configured to receive a second signal transmitted by the first node, wherein the first signal is a backscattered signal of the second signal.

34. The apparatus according to any one of claims 30 to 33, wherein the first signal carries at least one of the following information:
position information for indicating a position of the second node;
beam information for indicating a beam adopted by the second node to backscatter the first signal; or
frequency-domain resource information for indicating frequency-domain resources adopted by the second node to transmit or backscatter the first signal.

35. The apparatus according to any one of claims 30 to 34, wherein the apparatus further comprises a receiving module, configured to:
receive signals and/or data from the first node, wherein the signals and/or data are transmitted based on the first CSI; and/or
receive signals and/or data from the first node, wherein the signals and/or data are transmitted based on second CSI, and the second CSI is CSI between the first node and a third node.

36. The apparatus according to any one of claims 30 to 35, wherein the first node comprises a low-power terminal or a low-power module.

37. A communication device, comprising:
a processor;
a receiver and/or a transmitter connected to the processor; and
a memory for storing instructions executable by the processor;
wherein the communication device is configured to implement the method for acquiring channel state information according to any one of claims 1 to 11 or any one of claims 12 to 18.

38. A communication device, comprising:
a receiver; and/or
a transmitter;
wherein the communication device is configured to implement the method for acquiring channel state information according to any one of claims 1 to 11 or any one of claims 12 to 18.

39. A computer-readable storage medium, storing executable instructions, wherein the executable instructions are loaded and executed by a processor to implement the method for acquiring channel state information according to any one of claims 1 to 11 or any one of claims 12 to 18.

40. A chip, comprising a programmable logic circuit or a program, and the chip is configured to implement the method for acquiring channel state information according to any one of claims 1 to 11 or any one of claims 12 to 18.

41. A computer program product, comprising computer instructions stored in a computer-readable storage medium, a processor of a computer device is configured to read the computer instructions from the computer-readable storage medium, and execute the computer instructions to cause the computer device to implement the method for acquiring channel state information according to any one of claims 1 to 11 or any one of claims 12 to 18.

42. A computer program, comprising computer instructions stored in a computer-readable storage medium, a processor of a computer device is configured to execute the computer instructions to cause the computer device to implement the method for acquiring channel state information according to any one of claims 1 to 11 or any one of claims 12 to 18.
